(19) Europäisches Patentamt

European Patent Office

Office européen des brevets

(11) **EP 1 713 172 A1**

(12) **EUROPEAN PATENT APPLICATION**
published in accordance with Art. 158(3) EPC

(43) Date of publication:
**18.10.2006 Bulletin 2006/42**

(51) Int Cl.:
*H02P 9/04* (2006.01)     *B60K 6/04* (2006.01)
*H02K 7/12* (2006.01)     *H02K 21/24* (2006.01)
*H02P 9/06* (2006.01)

(21) Application number: **05709598.6**

(22) Date of filing: **02.02.2005**

(86) International application number:
**PCT/JP2005/001477**

(87) International publication number:
**WO 2005/076463 (18.08.2005 Gazette 2005/33)**

(84) Designated Contracting States:
**DE ES FR IT NL**

(30) Priority: **06.02.2004   JP 2004031386**
**09.12.2004   JP 2004357339**

(71) Applicant: **YAMAHA HATSUDOKI KABUSHIKI KAISHA**
**Iwata-shi, Shizuoka 438-8501 (JP)**

(72) Inventors:
  • **HINO, Haruyoshi**
    **Iwata-shi,**
    **Shizuoka 4388501 (JP)**
  • **MUROTA, Keiko**
    **Iwata-shi,**
    **Shizuoka 4388501 (JP)**
  • **NAITOU, Shinya**
    **Iwata-shi,**
    **Shizuoka 4388501 (JP)**
  • **UBUKATA, Katsunori**
    **Iwata-shi,**
    **Shizuoka 4388501 (JP)**
  • **TERADA, Junji**
    **Iwata-shi,**
    **Shizuoka 4388501 (JP)**
  • **ONO, Tomohiro**
    **Iwata-shi,**
    **Shizuoka 4388501 (JP)**
  • **KUROSAWA, Atsushi**
    **Iwata-shi,**
    **Shizuoka 4388501 (JP)**

(74) Representative: **Grünecker, Kinkeldey,**
**Stockmair & Schwanhäusser**
**Anwaltssozietät**
**Maximilianstrasse 58**
**80538 München (DE)**

(54) **VEHICLE**

(57)    A vehicle having a rotating electric machine small-sized and whose power generating characteristics and torque output characteristics are adjustable. The vehicle includes a rotating shaft (11, 51, 111, 161, 211, 240, 290), a rotor (22, 62, 122, 172, 222, 260, 310) attached to the rotating shaft to rotate with it, and a stator (21, 61, 121, 171, 221, 250, 300) provided opposite the rotor with a predetermined gap in between. The rotor and the stator are provided with a rotating electric machine (20, 60, 120, 170, 220, 230, 280) constructed such that an air gap length functioning as magnetic resistance is adjustable and with an engine (10, 50, 110, 160, 210) connected to the rotor of the rotating electric machine.

FIG.2

EP 1 713 172 A1

## Description

Technical Field

The present invention relates to a vehicle, and more particularly, it relates to a vehicle comprising a rotating electric machine including a rotor and a stator.

Background Art

In relation to a rotating electric machine for a vehicle including a rotor and a stator, a technique of controlling power generation characteristics and torque output characteristics by adjusting the quantity of magnetic flux between the rotor and the stator is known in general. Such a technique is disclosed in Japanese Patent Laying-Open No. 9-37598, for example.

In relation to such a radial gap type rotating electric machine that a rotor is arranged inside a stator while the stator and the rotor are opposed to each other in the radial direction, a technique of adjusting the quantity of magnetic flux between the rotor and stator by moving the rotor in the extensional direction of a rotating shaft thereby adjusting the magnitudes of the areas of mutually opposite portions of the stator and the rotor is disclosed in the aforementioned Japanese Patent Laying-Open No. 9-37598.

In order to adjust the quantity of change in the quantity of magnetic flux to increase in Japanese Patent Laying-Open No. 9-37598 having such a structure that the stator and the rotor are arranged in the radial direction, however, it is necessary to increase the quantity of movement of the rotor in the extensional direction of the rotating shaft. In this case, the space for the movement of the rotor in the extensional direction of the rotating shaft must be largely provided, and hence there arises such inconvenience that it is difficult to attain downsizing of the rotating electric machine. Consequently, there is such a problem that it is difficult to obtain a rotating electric machine capable of controlling power generation characteristics and torque output characteristics varying with the quantity of magnetic flux while attaining downsizing.

Disclosure of the Invention

The present invention has been proposed in order to solve the aforementioned problem, and an object of the present invention is to provide a vehicle comprising a rotating electric machine capable of adjusting power generation characteristics and torque output characteristics while attaining downsizing.

In order to attain the aforementioned object, a vehicle according to an aspect of the present invention comprises a rotating electric machine including a rotating shaft, a rotor mounted on the rotating shaft for corotating with the rotating shaft and a stator opposed to the rotor at a prescribed interval, with the rotor and the stator so formed that an air gap length functioning as magnetic resistance is adjustable and an engine connected to the rotor of the rotating electric machine.

In the vehicle according to this aspect, as hereinabove described, the rotor and the stator of the rotating electric machine are so formed that the air gap length functioning as magnetic resistance is adjustable, whereby the quantity of change in the quantity of magnetic flux flowing through a magnetic path formed by the rotor and the stator can be increased even if the quantity of movement of at least one of the rotor and the stator is small when adjusting the air gap length by moving at least one of the rotor and the stator in the extensional direction of the rotating shaft, for example. Thus, the quantity of movement of at least one of the rotor and the stator can be reduced when adjusting power generation characteristics and torque output characteristics of the rotating electric machine varying with the quantity of magnetic flux, whereby the rotating electric machine may not be increased in size. Consequently, a vehicle comprising a rotating electric machine capable of adjusting power generation characteristics and torque output characteristics while attaining downsizing can be obtained.

In the vehicle according to the aforementioned aspect, the engine is preferably started with the rotating electric machine. According to this structure, there is no need to provide an engine starting mechanism portion for starting the engine, whereby the structure of the vehicle can be simplified. In starting of the engine, further, the air gap length is adjusted for increasing the quantity of magnetic flux so that the torque output of the rotating electric machine increases, whereby the engine can be rendered easy to start. After starting of the engine, further, a load with respect to revolution of the engine can be increased from increase by so adjusting the air gap length that the quantity of magnetic flux decreases.

In this case, the rotating electric machine preferably further includes an adjusting mechanism portion for adjusting the air gap length and a speed detecting portion for detecting the speed of the engine or the rotor, the air gap length is preferably adjusted to reach a first value by the adjusting mechanism portion on the basis of the speed detected by the speed detecting portion in starting of the engine, and the air gap length is preferably adjusted to reach a second value by the adjusting mechanism portion on the basis of the speed detected by the speed detecting portion after starting of the engine. According to this structure, the quantity of magnetic flux can be increased in starting of the engine and the quantity of magnetic flux can be reduced after starting of the engine by reducing the air gap length in starting of the engine and increasing the air gap length after starting of the engine. Thus, the torque output of the rotating electric machine can be increased in starting of the engine, while occurrence of such inconvenience that the load with respect to the revolution of the engine increases due to increase of the quantity of magnetic flux can be suppressed after starting of the engine.

In the vehicle according to the aforementioned aspect, power is preferably applied to the engine by the rotating electric machine. According to this structure, the air gap length so reduced that the quantity of magnetic flux increases when applying power to the engine, whereby the torque output can be increased. Thus, there is no need to increase power supplied to the rotating electric machine in order to increase the torque output of the rotating electric machine, whereby the power supplied to the rotating electric machine can be inhibited from increase when applying power to the engine with the rotating electric machine. If increasing the air gap length when applying no power to the engine with the rotating electric machine, the quantity of magnetic flux so decreases that the load with respect to the revolution of the engine can be inhibited from increase.

The vehicle according to the aforementioned aspect preferably further comprises a power source charged by power generation of the rotating electric machine, while the engine is preferably driven by the rotating electric machine serving as a power generator. According to this structure, the quantity of generation of electromotive force can be easily increased due to increase of the quantity of magnetic flux and the power source can be excellently charged by reducing the air gap length in a case of application to a vehicle requiring high power generation efficiency. In a case of application to a vehicle requiring no high power generation efficiency or in a case of suppression of charging to the power source, the quantity of generation of electromotive force can be easily reduced due to reduction of the quantity of magnetic flux by increasing the air gap length. If increasing the air gap length when the engine is in high-speed revolution, iron loss can be reduced due to reduction of the quantity of magnetic flux, whereby it is possible to suppress occurrence of such inconvenience that the power generation efficiency of the rotating electric machine lowers due to occurrence of iron loss.

In the vehicle according to the aforementioned aspect, the rotor and the stator are preferably opposed to each other at the prescribed interval in the extensional direction of the rotating shaft, and the air gap length between the rotor and the stator is preferably adjusted by adjusting the distance between the rotor and the stator in the extensional direction of the rotating shaft. According to this structure, the air gap length between the rotor and the stator can be easily adjusted by adjusting the distance between the rotor and the stator in the extensional direction of the rotating shaft in such an axial gap type rotating electric machine that the rotor and the stator are opposed to each other at the prescribed interval in the extensional direction of the rotating shaft.

In the aforementioned structure in which the rotor and the stator are opposed to each other at the prescribed interval in the extensional direction of the rotating shaft, the air gap length between the rotor and the stator is preferably adjusted by adjusting the distance between the rotor and the stator in the extensional direction of the rotating shaft on the basis of a signal indicating a vehicle state. According to this structure, the air gap length between the rotor and the stator can be adjusted to a value responsive to the vehicle state by adjusting the distance between the rotor and the stator in the extensional direction of the rotating shaft on the basis of the signal indicating the vehicle state.

In the vehicle according to the aforementioned aspect, the stator preferably includes a first stator and a second stator opposed to each other at a prescribed interval, and the air gap length may be adjusted by moving at least one of the first stator and the second stator. According to this structure, the quantity of magnetic flux can be easily changed by rendering the magnitude of the air gap length of a magnetic path formed in an initial state of not moving the first stator and the second stator and the magnitude of the air gap length of a magnetic path formed in a state after moving at least one of the first stator and the second stator different from each other, for example.

In the aforementioned structure having the stator including the first stator and the second stator, the first stator preferably includes a plurality of first core members annularly arranged at a prescribed interval from each other, the second stator preferably includes a plurality of second core members annularly arranged at a prescribed interval from each other, and the air gap length is preferably adjusted by moving at least one of the first stator and the second stator thereby changing to a state where the first core members and the second core members are opposite to each other and a state where the first core members and the second core members are not opposite to each other. According to this structure, the quantity of magnetic flux can be more easily changed by rendering the air gap length of the magnetic path formed when the first core members and the second core members are opposite to each other and the air gap length of the magnetic path formed when the first core members and the second core members are not opposite to each other different from each other.

In the aforementioned structure having the first stator including the plurality of first core members and the second stator including the plurality of second core members, either the first core members or the second core members are preferably opposed to the rotor, a coil is preferably mounted on either the first core members or the second core members opposed to the rotor, and the air gap length is preferably so adjusted that substantially no magnetic path is formed on a portion of either the first core members or the second core members mounted with the coil. According to this structure, the magnetic flux can be inhibited from traversing the coil when the rotor rotates, whereby it is possible to inhibit the quantity of magnetic flux generated on either the first core members or the second core members from increase due to a current flowing to the coil through the magnetic flux traversing the coil. Thus, a load with respect to rotation of the rotor can be inhibited from increase. Further, inflow of the magnetic flux into the first core members and the second core members is suppressed when the rotor rotates, whereby the load with respect to rotation of the rotor can be inhibited from increase also by this.

In the aforementioned structure having the first stator including the plurality of first core members and the second stator including the plurality of second core members, the air gap length is preferably adjusted by rotating the second stator in the rotational direction of the rotor. According to this structure, the air gap length can be easily adjusted by rotating the second stator in the rotational direction of the rotor.

In the aforementioned structure rotating the second stator in the rotational direction of the rotor, the vehicle preferably further comprises a rotation driving portion for rotating the second stator in the rotational direction of the rotor. According to this structure, the second rotator can be easily rotated in the rotational direction of the rotor with the rotation driving portion.

In the aforementioned structure rotating the second stator in the rotational direction of the rotor, the air gap length between the first core members and the second core members preferably decreases below the distance between adjacent first core members when the first core members and the second core members are opposite to each other, the air gap length between adjacent first core members preferably decreases below the distance between the first core members and the second core members when the second stator rotates in the rotational direction of the rotor so that the second core members move to a position not opposite to the first core members, and the air gap length between the first core members and the second core members in the case where the first core members and the second core members are opposite to each other is preferably smaller than the air gap length between adjacent first core members in the case where the second core members move to the position not opposite to the first core members. According to this structure, the quantity of magnetic flux in the case where the first core members and the second core members are opposite to each other and the quantity of magnetic flux in the case where the second core members move to the position not opposite to the first core members can be easily rendered different from each other.

In the aforementioned structure having the first stator including the plurality of first core members and the second stator including the plurality of second core members, the plurality of first core members constituting the first stator may be opposed to the rotor at a prescribed interval in the extensional direction of the rotating shaft while the plurality of second core members constituting the second stator may be opposed to the first stator at a prescribed interval in the extensional direction of the rotating shaft, a magnetic path may be formed by the rotor, the first core members and the second core members in the state where the first core members and the second core members are opposite to each other, and a magnetic path may be formed by the rotor and the first core members in the state where the first core members and the second core members are not opposite to each other. According to this structure, the air gap length can be easily adjusted by changing the formed magnetic path in such an axial gap type rotating electric machine that the rotor and the first stator are opposed to each other at the prescribed interval in the extensional direction of the rotating shaft while the first stator and the second stator are opposed to each other at the prescribed interval in the extensional direction of the rotating shaft.

In the aforementioned structure having the first stator including the plurality of first core members and the second stator including the plurality of second core members, the rotor may include a cylindrically formed rotor, the plurality of first core members constituting the first stator may be opposed to the rotor at a prescribed interval in the radial direction while the plurality of second core members constituting the second stator may be arranged inside or outside the first stator at a prescribed interval with respect to the first stator, a magnetic path may be formed by the rotor, the first core members and the second core members in the state where the first core members and the second core members are opposed to each other, and a magnetic path may be formed by the rotor and the first core members in the state where the first core members and the second core members are not opposite to each other. According to this structure, the air gap length can be easily adjusted by changing the formed magnetic path in such a radial gap type rotating electric machine that the first stator is opposed to the cylindrical rotor at the prescribed interval in the radial direction while the second stator is arranged inside or outside the first stator at the prescribed interval with respect to the first stator.

In the aforementioned structure having the stator including the first stator and the second stator, the position of the first stator is preferably fixed, and the air gap length is preferably adjusted by moving the second stator. According to this structure, the air gap length can be easily adjusted by moving the second stator.

Brief Description of the Drawings

[Fig. 1] A model diagram showing the structure of an automatic two-wheeler according to a first embodiment of the present invention.

[Fig. 2] A sectional view showing the structures of an engine, a power generator and an engine starting mechanism portion of the automatic two-wheeler according to the first embodiment of the present invention.

[Fig. 3] A sectional view for illustrating a method of adjusting an air gap length in the power generator of the automatic two-wheeler according to the first embodiment shown in Fig. 2.

[Fig. 4] A graph showing the relation between the quantity of generation of electromotive force in the power generator and the speed of the engine of the automatic two-wheeler according to the first embodiment shown in Fig. 2.

[Fig. 5] Another graph showing the relation between the quantity of generation of electromotive force in the power generator and the speed of the engine of the automatic two-wheeler according to the first embodiment shown in Fig. 2.

[Fig. 6] A graph showing a line of B-H (magnetic flux density-magnetizing force) characteristics of a magnet and a line of a permeance coefficient.

[Fig. 7] A model diagram for illustrating the quantity of magnetic flux between a magnet and a yoke.

[Fig. 8] Another model diagram for illustrating the quantity of magnetic flux between another magnet and another yoke.

[Fig. 9] A sectional view showing the structures of an engine, a power generator and an engine starting mechanism portion of an automatic two-wheeler according to a second embodiment of the present invention.

[Fig. 10] A sectional view for illustrating a method of adjusting an air gap length in the power generator of the automatic two-wheeler according to the second embodiment shown in Fig. 9.

[Fig. 11] A sectional view showing the structures of an engine, a power generator and an engine starting mechanism portion of an automatic two-wheeler according to a third embodiment of the present invention.

[Fig. 12] An enlarged view of a portion around the power generator of the automatic two-wheeler according to the third embodiment shown in Fig. 11.

[Fig. 13] A sectional view for illustrating a method of adjusting an air gap length in the power generator of the automatic two-wheeler according to the third embodiment shown in Fig. 12.

[Fig. 14] A block diagram for illustrating a method of controlling a gap adjusting mechanism portion of the automatic two-wheeler according to the third embodiment shown in Fig. 11.

[Fig. 15] A graph for illustrating the method of adjusting the air gap length in the power generator of the automatic two-wheeler according to the third embodiment shown in Fig. 11.

[Fig. 16] Another graph for illustrating the method of adjusting the air gap length in the power generator of the automatic two-wheeler according to the third embodiment shown in Fig. 11.

[Fig. 17] Still another graph for illustrating the method of adjusting. the air gap length in the power generator of the automatic two-wheeler according to the third embodiment shown in Fig. 11.

[Fig. 18] A further graph for illustrating the method of adjusting the air gap length in the power generator of the automatic two-wheeler according to the third embodiment shown in Fig. 11.

[Fig. 19] A further graph for illustrating the method of adjusting the air gap length in the power generator of the automatic two-wheeler according to the third embodiment shown in Fig. 11.

[Fig. 20] A sectional view showing the structures of an engine and a power generator of an automatic two-wheeler according to a fourth embodiment of the present invention.

[Fig. 21] A graph showing the relation between a torque output and an air gap length in the power generator of the automatic two-wheeler according to the fourth embodiment shown in Fig. 20.

[Fig. 22] A graph showing the relation between the quantity of generation of electromotive force and the air gap length in the power generator of the automatic two-wheeler according to the fourth embodiment shown in Fig. 20.

[Fig. 23] A sectional view showing the structures of an engine and a power generator of an automatic two-wheeler according to a fifth embodiment of the present invention.

[Fig. 24] A model diagram showing the structures of an engine and an electric motor of an automatic two-wheeler according to a sixth embodiment of the present invention.

[Fig. 25] A graph showing the relation between the torque output of the electric motor and the engine speed in the automatic two-wheeler according to the sixth embodiment shown in Fig. 24.

[Fig. 26] A model diagram for illustrating a method of adjusting an air gap length in the electric motor of the automatic two-wheeler according to the sixth embodiment shown in Fig. 24.

[Fig. 27] A graph showing the relation between the torque output and the engine speed after adjusting the air gap length in the electric motor of the automatic two-wheeler according to the sixth embodiment shown in Fig. 24.

[Fig. 28] A block diagram for illustrating a method of transmitting power to a tire of the automatic two-wheeler according to the sixth embodiment shown in Fig. 24.

[Fig. 29] Another block diagram for illustrating the method of transmitting power to the tire of the automatic two-wheeler according to the sixth embodiment shown in Fig. 24.

[Fig. 30] A block diagram for illustrating the difference between the method of transmitting power to the tire of the automatic two-wheeler according to the sixth embodiment shown in Fig. 24 and a method of transmitting power to a tire of a conventional automatic two-wheeler.

[Fig. 31] A model diagram showing the structures of an engine and a power generator of an automatic two-wheeler according to a seventh embodiment of the present invention.

[Fig. 32] A graph showing the relation between the quantity of generation of electromotive force in the power generator and the engine speed of the automatic two-wheeler according to the seventh embodiment shown in Fig. 31.

[Fig. 33] A model diagram for illustrating a method of adjusting an air gap length in the power generator of the automatic two-wheeler according to the seventh embodiment shown in Fig. 31.

[Fig. 34] A graph showing the relation between the quantity of generation of electromotive force and the engine speed after adjusting the air gap length in the power generator of the automatic two-wheeler according to the seventh embodiment shown in Fig. 31.

[Fig. 35] A perspective view showing the structure of a rotating electric machine according to an eighth embodiment of the present invention.

[Fig. 36] An exploded perspective view of the rotating electric machine according to the eighth embodiment shown in Fig. 35.

[Fig. 37] A perspective view showing a state in rotation of a second stator of the rotating electric machine according to the eighth embodiment shown in Fig. 35.

[Fig. 38] Another perspective view showing the state in rotation of the second stator of the rotating electric machine according to the eighth embodiment shown in Fig. 35.

[Fig. 39] Still another perspective view showing the state in rotation of the second stator of the rotating electric machine according to the eighth embodiment shown in Fig. 35.

[Fig. 40] A model diagram for illustrating the flow of magnetic flux in the rotating electric machine according to the eighth embodiment shown in Fig. 35.

[Fig. 41] Another model diagram for illustrating the flow of the magnetic flux in the rotating electric machine according to the eighth embodiment shown in Fig. 35.

[Fig. 42] A front elevational view showing the structure of a rotating electric machine according to a ninth embodiment of the present invention.

[Fig. 43] A front elevational view showing a state where a second stator rotates from the state shown in Fig. 42.

Best Modes for Carrying Out the Invention

Embodiments of the present invention are now described with reference to the drawings.

(First Embodiment)

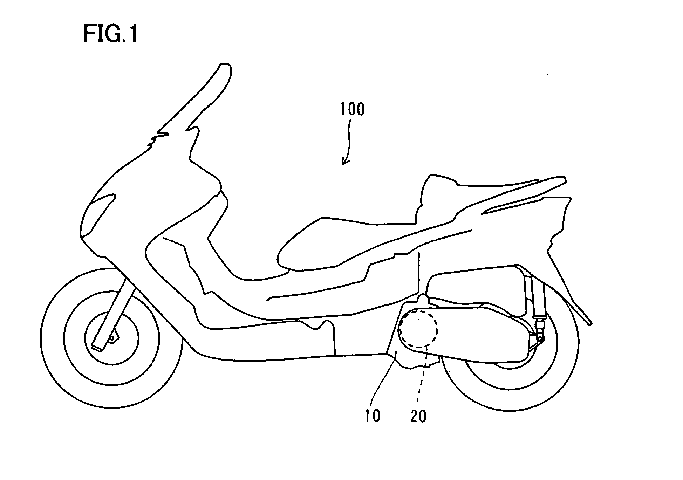

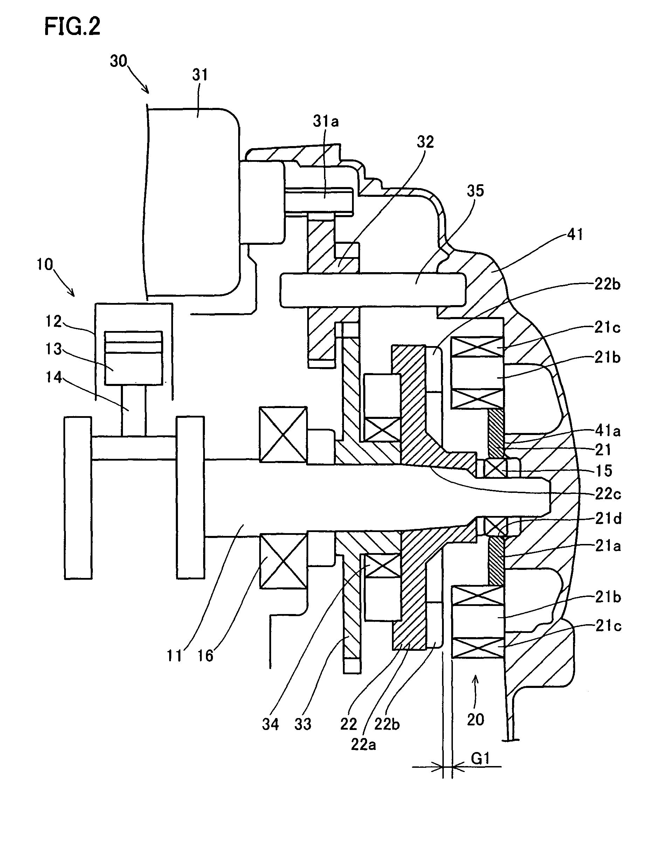

First, an automatic two-wheeler 100 according to a first embodiment is described with reference to Figs. 1 and 2.

The automatic two-wheeler 100 according to the first embodiment comprises an engine 10, a power generator 20 and an engine starting mechanism portion 30 (see Fig. 2), as shown in Fig. 1. The power generator 20 is an example of the "rotating electric machine" in the present invention.

The engine 10 is constituted of a crankshaft 11, a cylinder 12, a piston 13 and a connecting rod 14, as shown in Fig. 2. The crankshaft 11 is an example of the "rotating shaft" in the present invention. The crankshaft 11 is rotatably supported by bearings 15 and 16. The piston 13 is coupled to the crankshaft 11 through the connecting rod 14, and fitted into the cylinder 12. Thus, the crankshaft 11 is rotated in synchronization with reciprocation of the piston 13.

The power generator 20 is constituted of a stator 21 and a rotor 22. In the power generator 20, the aforementioned crankshaft 11 is employed as a rotating shaft. The power generator 20 has such an axial gap type structure that the stator 21 and the rotor 22 are opposed to each other at a prescribed interval in the extensional direction of the crankshaft 11.

As the specific structure of the power generator 20, the stator 21 includes a stator yoke 21a, a plurality of teeth 21b and a plurality of coils 21c. The stator yoke 21a is formed in the shape of a disc, and fixed to a stator mounting portion 41a of a case 41. Further, the stator yoke 21a has a hole portion 21d in the central portion thereof, and is so arranged that the center of the hole portion 21d (stator yoke 21a) and the axial core of the crankshaft 11 coincide with each other. The plurality of teeth 21b are mounted on the stator yoke 21a to protrude from a surface of the stator yoke 21a closer to the rotor 22. Further, the plurality of teeth 21b are arranged at a prescribed interval from each other along the circumferential direction of the discoid stator yoke 21a. Fig. 2 illustrates only two teeth 21b opposite to each other through the central point of the discoid stator yoke 21a. The plurality of coils 21c are mounted on the respective ones of the plurality of teeth 21b respectively.

The rotor 22 includes a rotor yoke 22a and a plurality of magnets 22b. The rotor yoke 22a is formed in the shape of a disc, so that the central portion thereof protrudes toward the stator 21. A hole portion 22c is formed in the central portion of the rotor yoke 22a. The crankshaft 11 is fitted into this hole portion 22c of the rotor yoke 22a, so that the rotor yoke 22a corotates with the crankshaft 11. The plurality of magnets 22b include a plurality of magnets 22b of north poles and a plurality of magnets 22b of south poles, and are mounted on a surface of the rotor yoke 22a closer to the stator 21. In the plurality of magnets 22b, the north poles and the south poles are alternately arranged at a prescribed interval along the circumferential direction of the discoid rotor yoke 22a. Fig. 2 illustrates only two magnets 22b opposite to each other through the central point of the discoid rotor yoke 22a.

In the power generator 20 according to the first embodiment, a magnetic path is formed by the stator yoke 21a, the teeth 21b and the rotor yoke 22a. In this case, the distance between the teeth 21b (stator 21) and the magnets 22b (rotor 22) in the extensional direction of the crankshaft 11 is an air gap length functioning as magnetic resistance. In other words, the air gap length is G1 in Fig. 2.

The engine starting mechanism portion 30 is constituted of a self-starting motor 31, gears 32 and 33 and a starter clutch 34. The gear 32 is rotatably supported on a shaft 35 mounted on the case 41, and meshed with a gear shaft 31a of the self-starting motor 31 and the gear 33. In other words, the gear 32 has a function of transmitting power of the self-starting motor 31 to the gear 33. The gear 33 is so arranged that the rotation center of the gear 33 and the axial core of the crankshaft 11 coincide with each other. The starter clutch 34 is arranged on the gear 33, and has a function of transmitting the power transmitted to the gear 33 to the rotor 22. Thus, the power of the self-starting motor 31 is transmitted to the crankshaft 11 through the gears 32 and 33, the starter clutch 34 and the rotor 22.

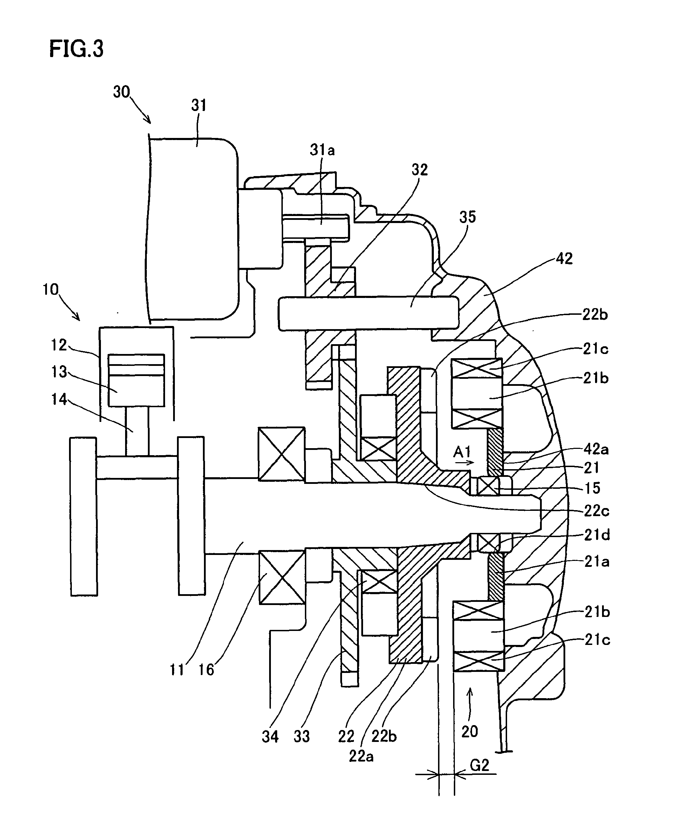

A method of adjusting the air gap length in the power generator 20 according to the first embodiment is now described with reference to Figs. 2 and 3. A case of reducing the quantity of generation of electromotive force by adjusting the air gap length in the power generator 20 according to the first embodiment is now described.

In a case of reducing the quantity of generation of electromotive force in the power generator 20 according to the first embodiment shown in Fig. 2, the air gap length of the magnetic path formed by the stator 21 and the rotor 22 is increased from G1 (see Fig. 2) to G2 (see Fig. 3).

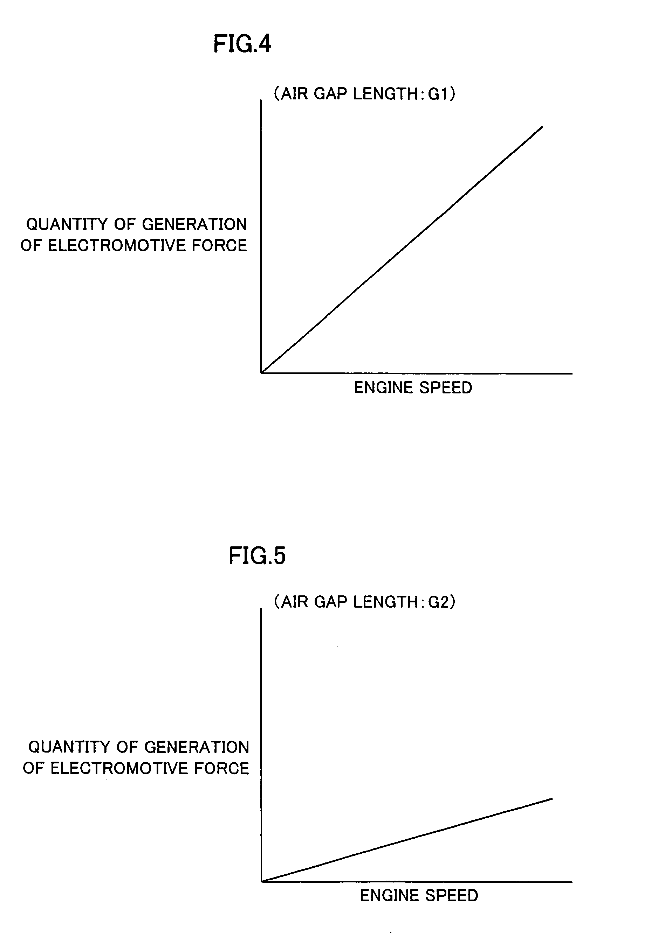

More specifically, a case 42 having a stator mounting portion 42a is employed in place of the case 41 (see Fig. 2) having the stator mounting portion 41a in the first embodiment, as shown in Fig. 3. The stator mounting portion 42a of this case 42 is provided on a position moved by a prescribed distance (G2 - G1) in the extensional direction (direction of arrow A1) of the crankshaft 11 with respect to the stator mounting portion 41a of the case 41 shown in Fig. 2. Thus, the stator 21 is so mounted on the stator mounting portion 42a of the case 42 that the stator 21 is moved by the prescribed distance (G2 - G1) in the direction of arrow A1 from the position shown in Fig. 2, whereby the distance (G2) between the stator 21 and the rotor 22 in the extensional direction of the crankshaft 11 exceeds the distance (G1) between the stator 21 and the rotor 22 in the extensional direction of the crankshaft 11 shown in Fig. 2. Therefore, the air gap length of the magnetic path formed by the stator 21 and the rotor 22 increases from G1 (see Fig. 2) to G2 (see Fig. 3). Consequently, the quantity of magnetic flux between the stator 21 and the rotor 22 decreases when the air gap length of the magnetic path is G2 (see Fig. 3), as compared with the case where the air gap length of the magnetic path is G1 (see Fig. 2). In this case, the quantity of generation of electromotive force with respect to the speed of the engine 10 decreases in the power generator 20 (see Figs. 3 and 5) whose air gap length is G2 as compared with the power generator 20 (see Figs. 2 and 4) whose air gap length is G1, as shown in Figs. 4 and 5.

According to the first embodiment, as hereinabove described, the air gap length is increased from G1 to G2 by moving the stator 21 by the prescribed distance (G2 - G1) in the extensional direction (direction of arrow A1) of the crankshaft 11 in such an axial gap type structure that the stator 21 and the rotor 22 are opposed to each other at the prescribed interval in the extensional direction of the crankshaft 11, whereby the quantity of change in the quantity of magnetic flux flowing through the magnetic path formed by the rotor 22 and the stator 21 can be increased also when the quantity (G2 - G1) of movement of the stator 21 in the extensional direction (direction of arrow A1) of the crankshaft 11 is small. Thus, the quantity of movement of the stator 21 can be reduced, whereby the power generator 20 may not be increased in size. Consequently, the power generator 20 capable of adjusting power generation characteristics while attaining downsizing can be obtained.

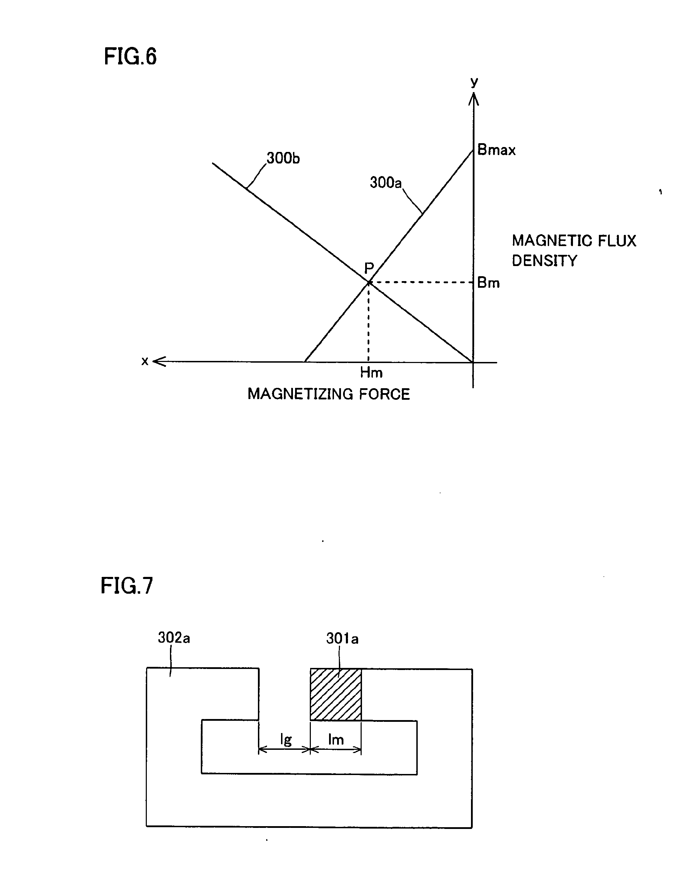

Difference in change of the quantity of magnetic flux between a case of controlling the quantity of magnetic flux by adjusting an air gap length between a rotor (magnet) and a stator (yoke) and a case of controlling the quantity of magnetic flux by adjusting the magnitudes of the areas of mutually opposite portions of a rotor (magnet) and a stator (yoke) is now described with reference to Figs. 6 to 8. Bm in Fig. 6 denotes the density of magnetic flux generated by the magnet, and Hm in Fig. 6 denotes magnetizing force of the magnet. Further, a straight line 300a in Fig. 6 shows a line of B-H (magnetic flux density-magnetizing force) characteristics of the magnet, and another straight line 300b in Fig. 6 shows a line of a permeance coefficient. The intersection point P between the straight lines 300a and 300b shows the magnetic flux density (Bm) and the magnetizing force (Hm) of the magnet.

In a model shown in Fig. 7, a permeance coefficient (Bm/Hm) in a case where an air gap length (1g) between a magnet 301a and a yoke 302a changes is obtained through the following equation (1):

$$\mathrm{Bm/Hm \ = \ (lm/Am) \cdot (Ag/lg) \cdot (\sigma/f) \ \cdots \ (1)}$$

where 1m: magnet length, Am: magnet sectional area, Ag: air gap sectional area, σ: leakage coefficient, f: magnetomotive force loss factor. Assuming that Am = Ag and 1m = 1 while ignoring influence by leakage flux (assuming that σ = f = 1), the permeance coefficient (Bm/Hm) results in the following equation (2):

$$\mathtt{Bm/Hm\ =\ 1/lg\ \cdot\cdot\ (2)}$$

In other words, the permeance coefficient (Bm/Hm) changes due to change of the air gap length (lg) between the magnet 301a and the yoke 302a.

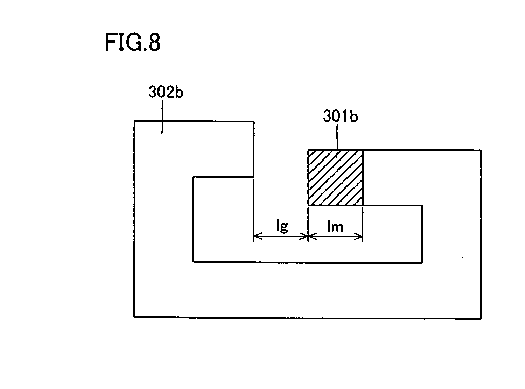

Assuming that Am = Ag and 1m = 1 while ignoring influence by leakage flux (assuming that σ = f = 1) as to the permeance coefficient (Bm/Hm) in a case of changing the magnitudes of the areas of mutually opposite portions of a magnet 301b and a yoke 302b as in a model shown in Fig. 8, the permeance coefficient (Bm/Hm) remains unchanged through the above equation (2) since the air gap length (1g) between the magnet 301b and the yoke 302b remains unchanged.

The difference between the quantity of magnetic flux at a time of doubling the air gap length between the magnet 301a and the yoke 302a in the model shown in Fig. 7 and the quantity of magnetic flux at a time of halving the magnitudes of the areas of the mutually opposite portions of the magnet 301b and the yoke 302b as in the model shown in Fig. 8 is now described.

First, the straight lines 300a and 300b in Fig. 6 can be expressed in the following equations (3) and (4) respectively:

$$\mathtt{y\ =\ \mu_0 x\ +\ Bmax\ \cdot\cdot\ (3)}$$

$$\mathtt{y\ =\ -(Bm/Hm)x\ \cdot\cdot\ (4)}$$

$\mu_0$ in the above equation (3) denotes the permeability of vacuum magnetic constant.

In the case of doubling the air gap length between the magnet 301a and the yoke 302a (Am = Ag = 1, lg = 2) in the model shown in Fig. 7, the permeance coefficient (Bm/Hm) reaches Bm/Hm = 1/lg = 1/2 through the above equation (2). The magnetizing force (Hm) in this case reaches Hm = -Bmax/(1 + $\mu_0$/2) through the above equations (3) and (4). Thus, the quantity of magnetic flux (Bm·Ag) in the air gap between the magnet 301a and the yoke 302a results in the following equation (5):

$$\mathtt{Bm \cdot Ag\ =\ (Hm/2) \cdot 1\ =\ -Bmax(2\ +\ \mu_0)\ \cdot\cdot\ (5)}$$

In the case of halving the magnitudes of the areas of the mutually opposite portions of the magnet 301b and the yoke 302b (Am = Ag = 1/2, lg = 1) as in the model shown in Fig. 8, the permeance coefficient (Bm/Hm) reaches Bm/Hm = 1/lg = 1 through the above equation (2). The magnetizing force (Hm) in this case reaches Hm = -Bmax(1 + $\mu_0$) through the above equations (3) and (4). Thus, the quantity of magnetic flux (Bm·Ag) in the air gap between the magnet 301b and the yoke 302b results in the following equation (6):

$$\mathtt{Bm \cdot Ag\ =\ Hm \cdot (1/2)\ =\ -Bmax(2\ +\ 2\mu_0)\ \cdot\cdot\ (6)}$$

Since the permeability of vacuum magnetic constant ($\mu_0$) is at a small value of $\mu_0 = 4\pi \cdot 10^{-7}$, the term of $\mu_0$ is ignorable. Therefore, it can be said that the quantities of magnetic flux of the air gaps are substantially identical in the case of doubling the air gap length between the magnet 301a and the yoke 302a (equation (5)) and the case of halving the magnitudes of the areas of the mutually opposite portions of the magnet 301b and the yoke 302b (equation (6)).

In the positional relation between the magnet and the yoke of the rotating electric machine, however, the air gap length is by far smaller than the lengths of edges of mutually opposite surfaces of the magnet and the yoke. Therefore, the quantity of movement of the magnet 301a or the yoke 302a in the case of doubling the air gap length between the magnet 301a and the yoke 302a can be reduced below the quantity of movement of the magnet 301b or the yoke 302b in the case of halving the magnitudes of the areas of the mutually opposite portions of the magnet 301b and the yoke 302b when adjusting the quantity of magnetic flux to a prescribed value.

Therefore, it can be said that the quantity of change in the quantity of magnetic flux flowing through the magnetic path formed by the rotor 22 and the stator 21 can be increased in the first embodiment controlling the quantity of magnetic flux by adjusting the air gap length, also when the quantity (G2 - G1) of movement of the stator 21 in the extensional direction (direction of arrow A1) of the crankshaft 11 is small.

According to the first embodiment, the power generation characteristics of the power generator 20 can be adjusted without changing the numbers of turns of the coils 21c constituting the stator 21, the quantities of magnetization of the magnets 22b constituting the rotor 22, the outer diameter of the stator 21 (rotor 22) and the thickness of the stator 21 (rotor 22), by controlling the quantity of magnetic flux by adjusting the air gap length. Thus, neither design nor components of the power generator 20 may be changed also when the required specification (power generation characteristics) varies with the type of the vehicle, whereby the components can be rendered in common.

(Second Embodiment)

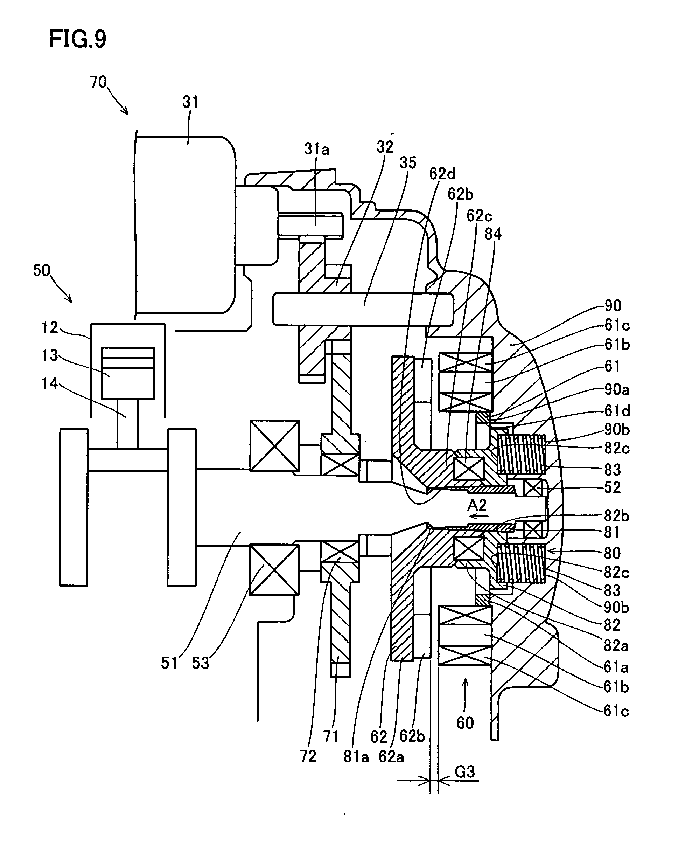

Referring to Fig. 9, a case of providing a gap adjusting mechanism portion for adjusting an air gap length dissimilarly to the aforementioned first embodiment is described in this second embodiment.

According to this second embodiment, an engine 50, a power generator 60 and an engine starting mechanism portion 70 are mounted on an automatic two-wheeler (not shown) similar to the automatic two-wheeler 100 according to the first embodiment shown in Fig. 1, as shown in Fig. 9. The power generator 60 is an example of the "rotating electric machine" in the present invention.

The engine 50 is constituted of a crankshaft 51, a cylinder 12, a piston 13 and a connecting rod 14. The crankshaft 51 is an example of the "rotating shaft" in the present invention. The crankshaft 51 is rotatably supported by bearings 52 and 53. The remaining structure of the engine 50 is similar to that of the engine 10 according to the aforementioned first embodiment.

According to the second embodiment, the power generator 60 is constituted of a stator 61, a rotor 62 and a gap adjusting mechanism portion 80. The gap adjusting mechanism portion 80 is an example of the "adjusting mechanism portion" in the present invention. In the power generator 60, the aforementioned crankshaft 51 is employed as a rotating shaft. Further, the power generator 60 has such an axial gap type structure that the stator 61 and the rotor 62 are opposed to each other at a prescribed interval in the extensional direction of the crankshaft 51.

As the specific structure of the power generator 60, the stator 61 includes a stator yoke 61a, a plurality of teeth 61b and a plurality of coils 61c. The stator yoke 61a is formed in the shape of a disc, and fixed to a stator mounting portion 90a of a case 90. Further, the stator yoke 61a has a hole portion 61d in the central portion thereof, and is so arranged that the center of the hole portion 61d (stator yoke 61a) and the axial core of the crankshaft 51 coincide with each other. The plurality of teeth 61b are mounted on the stator yoke 61a to protrude from a surface of the stator yoke 61a closer to the rotor 62. Further, the plurality of teeth 61b are arranged at a prescribed interval from each other along the circumferential direction of the discoid stator yoke 61a. Fig. 9 illustrates only two teeth 61b opposite to each other through the central point of the discoid stator yoke 61a. The plurality of coils 61c are mounted on the respective ones of the plurality of teeth 61b respectively.

The rotor 62 includes a rotor yoke 62a and a plurality of magnets 62b. The rotor yoke 62a is formed in the shape of a disc, while a protrusion 62c protruding toward the stator 61 is formed on the central portion of the rotor yoke 62a. A hole portion 62d is formed in the central portion of the rotor yoke 62a. A helical spline is formed on the inner peripheral surface of this hole portion 62d of the rotor yoke 62a. The plurality of magnets 62b include a plurality of magnets 62b of north poles and a plurality of magnets 62b of south poles, and are mounted on a surface of the rotor yoke 62a closer to the stator 61. In the plurality of magnets 62b, the north poles and the south poles are alternately arranged at a prescribed interval along the circumferential direction of the discoid rotor yoke 62a. Fig. 9 illustrates only two magnets 62b opposite to each other through the central point of the discoid rotor yoke 62a.

In the power generator 60 according to the second embodiment, a magnetic path is formed by the stator yoke 61a, the teeth 61b and the rotor yoke 62a. In this case, the distance between the teeth 61b (stator 61) and the magnets 62b (rotor 62) in the extensional direction of the crankshaft 51 is an air gap length functioning as magnetic resistance. In other words, the air gap length is G3 in Fig. 9.

According to the second embodiment, the gap adjusting mechanism portion 80 includes a cylindrical member 81, a slider 82 and a spring member 83. The slider 82 is an example of the "movable member" in the present invention. The crankshaft 51 is fitted into the cylindrical member 81, so that the cylindrical member 81 corotates with the crankshaft 51. A helical spline is formed on a prescribed portion 81a of the outer peripheral surface of the cylindrical member 81. The helical spline formed on the inner peripheral surface of the hole portion 62d of the rotor yoke 62a is meshed with this helical spline formed on the portion 81a of the outer peripheral surface of the cylindrical member 81. In other words, the cylindrical member 81 and the rotor yoke 62a are coupled with each other through the helical splines.

The slider 82 is formed in the shape of a disc, and a projection 82a projecting toward the rotor 62 is formed on the central portion of the slider 82. Further, a hole portion 82b is formed in the central portion of the slider 82. In addition, the slider 82 is mounted on a portion of the cylindrical member 81 other than the portion 81a formed with the helical spline, not to corotate with the cylindrical member 81 (crankshaft 51). The projection 82a of the slider 82 and the projection 62c of the rotor yoke 62a are coupled with each other through a bearing 84. A spring member mounting portion 82c is formed on a portion of the slider 82 opposite to the rotor 62 (closer to the case 90).

The spring member 83 is arranged to be capable of urging the slider 82 in the extensional direction (direction of arrow A2) of the crankshaft 51. More specifically, an end of the spring member 83 is mounted on the spring member mounting portion 90b of the case 90, while the other end is mounted on the spring member mounting portion 82c of the slider 82.

The engine starting mechanism portion 70 is constituted of a self-starting motor 31, gears 32 and 71 and a starter clutch 72. The gear 32 is rotatably supported on a shaft 35 mounted on the case 90, and meshed with a gear shaft 31a of the self-starting motor 31 and the gear 71. The gear 71 is so arranged that the rotation center of the gear 71 and the axial core of the crankshaft 51 coincide with each other. The starter clutch 72 is arranged inside the gear 71, and has a function of transmitting power transmitted to the gear 71 to the crankshaft 51.

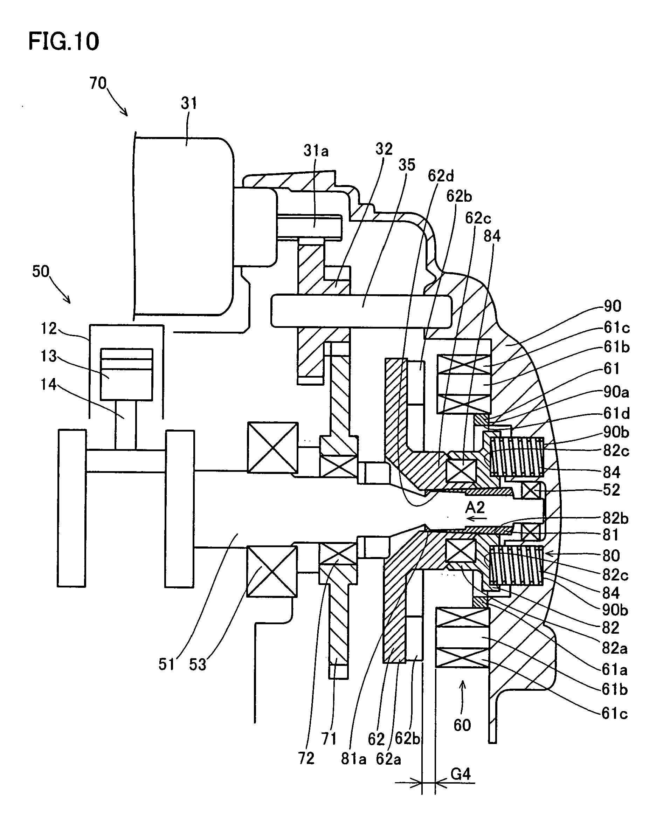

A method of adjusting the air gap length in the power generator 60 according to the second embodiment is now described with reference to Figs. 9 and 10. A case of reducing the quantity of generation of electromotive force by adjusting the air gap length in the power generator 60 according to the second embodiment is now described.

In a case of reducing the quantity of generation of electromotive force in the power generator 60 according to the second embodiment shown in Fig. 9, the air gap length of the magnetic path formed by the stator 61 and the rotor 62 is increased from G3 (see Fig. 9) to G4 (see Fig. 10).

More specifically, a spring member 84 having larger urging force in the extensional direction (direction of arrow A2) of the crankshaft 51 than the spring member 83 is employed in place of the spring member 83 (see Fig. 9), as shown in Fig. 10. In this case, the slider 82 moves from the position shown in Fig. 9 in the direction of arrow A2 along the crankshaft 51 due to the urging force of the spring member 84 in the direction of arrow A2. Since the rotor yoke 62a and the cylindrical member 81 are coupled with each other through the helical splines and the rotor yoke 62a is pressed by the slider 82 in the direction of arrow A2 through the bearing 84, the rotor 62 moves by a prescribed distance (G4 - G3) in the direction of arrow A2 along the crankshaft 51 while rotating. Thus, the distance between the stator 61 and the rotor 62 in the extensional direction of the crankshaft 51 exceeds the distance between the stator 61 and the rotor 62 in the extensional direction of the crankshaft 51 shown in Fig. 9. Therefore, the air gap length of the magnetic path formed by the stator 61 and the rotor 62 increases from G3 (see Fig. 9) to G4 (see Fig. 10). Thus, the quantity of magnetic flux between the stator 61 and the rotor 62 decreases when the air gap length of the magnetic path is G4 (see Fig. 10), as compared with the case where the air gap length of the magnetic path is G3 (see Fig. 9). Consequently, the quantity of generation of electromotive force in the power generator 60 (air gap length: G4) shown in Fig. 10 decreases below the quantity of generation of electromotive force in the power generator 60 (air gap length: G3) shown in Fig. 9.

According to the second embodiment, as hereinabove described, the air gap length is increased from G3 to G4 by moving the rotor 62 by the prescribed distance (G4 - G3) in the extensional direction (direction of arrow A2) of the crankshaft 51, whereby the quantity of change in the quantity of magnetic flux flowing through the magnetic path formed by the rotor 62 and the stator 61 can be increased similarly to the aforementioned first embodiment, also when the quantity (G4 - G3) of movement of the rotor 62 in the extensional direction (direction of arrow A2) of the crankshaft 51 is small. Thus, the quantity of movement of the rotor 62 can be reduced, whereby the power generator 60 may not be increased in size. Consequently, the power generator 60 capable of adjusting power generation characteristics while attaining downsizing can be obtained similarly to the aforementioned first embodiment.

According to the second embodiment, the air gap length between the rotor 62 and the stator 61 can be easily adjusted by moving the rotor 62 in the extensional direction (direction of arrow A2) of the crankshaft 51 by the gap adjusting mechanism portion 80.

According to the second embodiment, the air gap length between the rotor 22 and the stator 21 is adjusted by adjusting the urging force of the spring member 83, whereby the quantity of magnetic flux between the rotor 62 and the stator 61 can be controlled by exchanging the spring member 83. Thus, the power generation characteristics of the power generator 60 can be easily controlled. In this case, the gap adjusting mechanism portion 80 is constituted of the cylindrical member 81, the slider 82 and the spring member 83 to be capable of moving the rotor 62 with the urging force of the spring member 83, whereby the structure of the gap adjusting mechanism portion 80 can be simplified as compared with a case of moving the rotor 62 with a motor or the like.

(Third Embodiment)

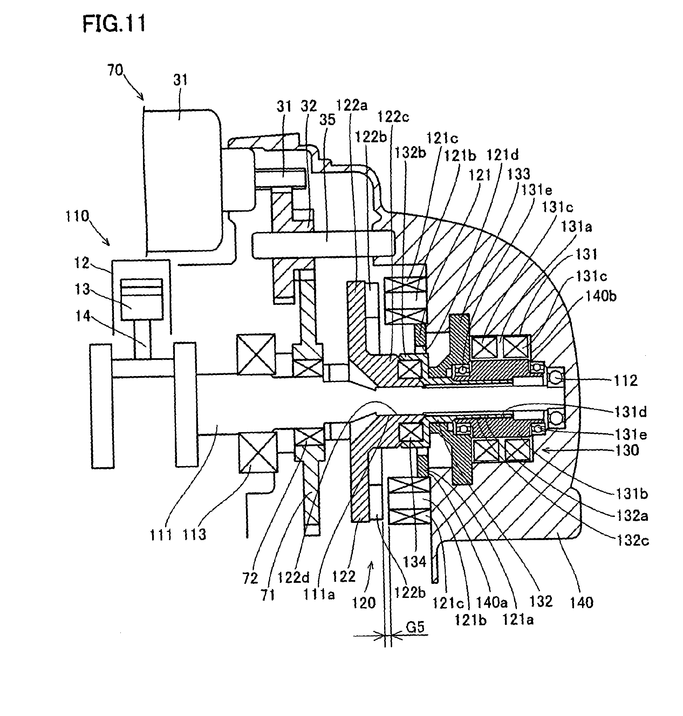

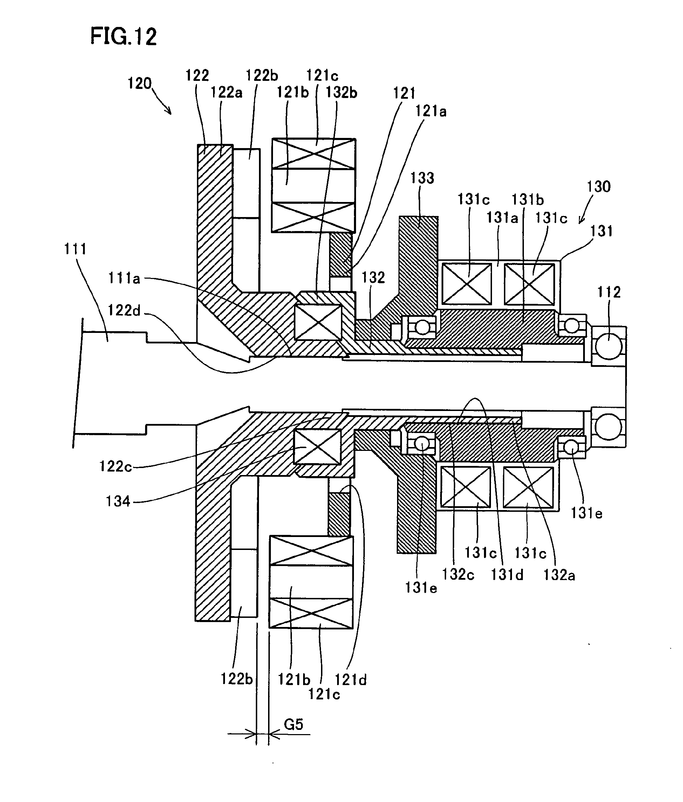

Referring to Figs. 11 and 12, a case of adjusting an air gap length with a stepping motor dissimilarly to the aforementioned second embodiment is described in this third embodiment.

In this third embodiment, an engine 110, a power generator 120 and an engine starting mechanism portion 70 are mounted on an automatic two-wheeler (not shown) similar to the automatic two-wheeler 100 according to the first embodiment shown in Fig. 1, as shown in Fig. 11. The structure of the engine starting mechanism portion 70 is similar to that of the engine starting mechanism portion 70 according to the aforementioned second embodiment. The power generator 120 is an example of the "rotating electric machine" in the present invention.

The engine 110 is constituted of a crankshaft 111, a cylinder 12, a piston 13 and a connecting rod 14. The crankshaft 111 is an example of the "rotating shaft" in the present invention. The crankshaft 111 is rotatably supported by bearings 112 and 113. A helical spline is formed on a prescribed portion 111a of the crankshaft 111. The remaining structure of the engine 110 is similar to that of the engine 10 according to the aforementioned first embodiment.

According to the third embodiment, the power generator 120 is constituted of a stator 121, a rotor 122 and a gap adjusting mechanism portion 130, as shown in Figs. 11 and 12. The gap adjusting mechanism portion 130 is an example of the "adjusting mechanism portion" in the present invention. In the power generator 120, the aforementioned crankshaft 111 is employed as a rotating shaft. Further, the power generator 120 has such an axial gap type structure that the stator 121 and the rotor 122 are opposed to each other at a prescribed interval in the extensional direction of the crankshaft 111.

As the specific structure of the power generator 120, the stator 121 includes a stator yoke 121a, a plurality of teeth 121b and a plurality of coils 121c. The stator yoke 121a is formed in the shape of a disc, and fixed to a stator mounting portion 140a of a case 140. Further, the stator yoke 121a has a hole portion 121d in the central portion thereof, and is so arranged that the center of the hole portion 121d (stator yoke 121a) and the axial core of the crankshaft 111 coincide with each other. The plurality of teeth 121b are mounted on the stator yoke 121a to protrude from a surface of the stator yoke 121a closer to the rotor 122. Further, the plurality of teeth 121b are arranged at a prescribed interval from each other along the circumferential direction of the discoid stator yoke 121a. Figs. 11 and 12 illustrate only two teeth 121b opposite to each other through the central point of the discoid stator yoke 121a. The plurality of coils 121c are mounted on the respective ones of the plurality of teeth 121b respectively.

The rotor 122 includes a rotor yoke 122a and a plurality of magnets 122b. The rotor yoke 122a is formed in the shape of a disc, while a protrusion 122c protruding toward the stator 121 is formed on the central portion of the rotor yoke 122a. A hole portion 122d is formed in the central portion of the rotor yoke 122a. A helical spline is formed on the inner peripheral surface of this hole portion 122d of the rotor yoke 122a. The helical spline formed on the prescribed portion 111a of the crankshaft 111 is meshed with the helical spline formed on the inner peripheral surface of the hole portion 122d of the rotor yoke 122a. In other words, the rotor yoke 122a and the crankshaft 111 are coupled with each other through the helical splines. The plurality of magnets 122b include a plurality of magnets 122b of north poles and a plurality of magnets 122b of south poles, and are mounted on a surface of the rotor yoke 122a closer to the stator 121. In the plurality of magnets 122b, the north poles and the south poles are alternately arranged at a prescribed interval along the circumferential direction of the discoid rotor yoke 122a. Figs. 11 and 12 illustrate only two magnets 122b opposite to each other through the central point of the discoid rotor yoke 122a.

In the power generator 120 according to the third embodiment, a magnetic path is formed by the stator yoke 121a, the teeth 121b and the rotor yoke 122a. In this case, the distance between the teeth 121b (stator 121) and the magnets 122b (rotor 122) in the extensional direction of the crankshaft 111 is an air gap length functioning as magnetic resistance. In other words, the air gap length is G5 in Figs. 11 and 12.

According to the third embodiment, the gap adjusting mechanism portion 130 includes a stepping motor 131, a slider 132 and a slider support member 133. The stepping motor 131 and the slider 132 are examples of the "motor" and the "movable member" in the present invention respectively. The stepping motor 131 is constituted of a cylindrical stator 131a including a plurality of coils 131c and a cylindrical rotor 131b including a plurality of magnets (not shown). The stator 131a is fixed to a motor mounting portion 140b of the case 140, while the rotor 131b is arranged inside the stator 131a. A screw is formed on the inner peripheral surface 131d of the rotor 131b. Further, the rotor 131b is rotatably supported by a pair of bearings 131e. The stepping motor 131 is so arranged that the rotor 131b rotates in the same direction as the crankshaft 111 while the rotation center of the rotor 131b and the axial core of the crankshaft 111 coincide with each other.

The slider 132 has a cylindrical portion 132a and a rotor pressing portion 132b. A screw is formed on a prescribed portion 132c of the outer peripheral surface of the cylindrical portion 132a of the slider 132, while the screw formed on the inner peripheral surface 131d of the rotor 131b of the stepping motor 131 is meshed with this screw of the slider 132. In other words, the slider 132 and the stepping motor 131 (rotor 131b) are coupled with each other through the screws. Further, the slider 132 is supported by the slider support member 133, not to corotate with the rotor 131b of the stepping motor 131. The rotor pressing portion 132b of the slider 132 and the protrusion 122c of the rotor yoke 122a are coupled with each other through a bearing 134.

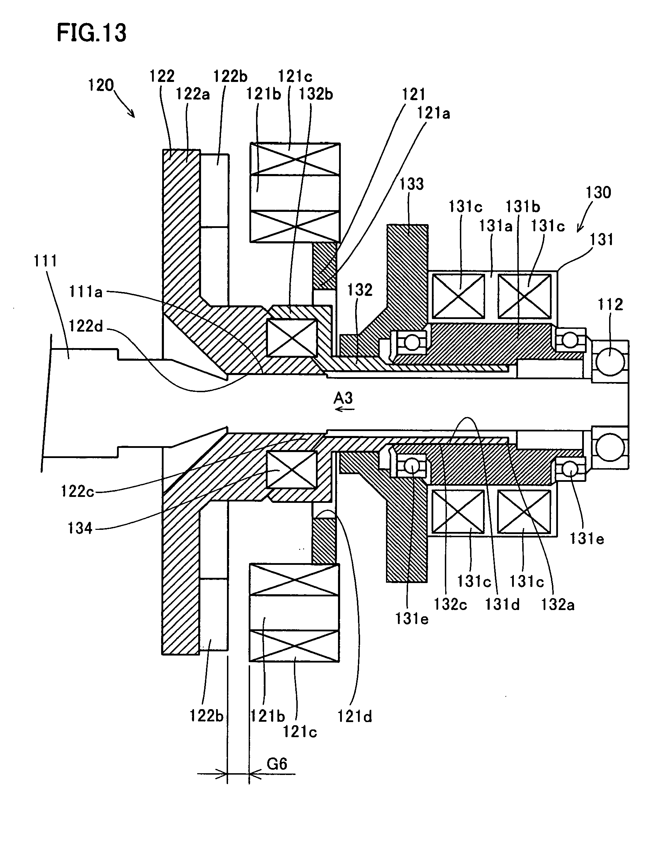

A method of adjusting the air gap length in the power generator 120 according to the third embodiment is now described with reference to Figs. 12 and 13. A case of reducing the quantity of generation of electromotive force by adjusting the air gap length in the power generator 120 according to the third embodiment is now described.

In a case of reducing the quantity of generation of electromotive force in the power generator 120 according to the third embodiment shown in Fig. 12, the air gap length of the magnetic path formed by the stator 121 and the rotor 122 is increased from G5 (see Fig. 12) to G6 (see Fig. 13).

More specifically, the rotor 131b is rotated by a prescribed quantity by feeding a current to the coils 131c of the stator 131a in the stepping motor 131 in the third embodiment, as shown in Fig. 13. At this time, the slider 132 moves in a direction of arrow A3 along the crankshaft 111 from the position shown in Fig. 12 since the stepping motor 131 (rotor 131b) and the slider 132 are coupled with each other through the screws. The quantity of movement of the slider 132 in the direction of arrow A3 is adjusted through the quantity of rotation of the stepping motor 131 (rotor 131b). Since the rotor yoke 122a and the crankshaft 111 are coupled with each other through the helical splines and the rotor yoke 122a is pressed by the slider 132 in the direction of arrow A3 through the bearing 134, the rotor 122 moves by a prescribed distance (G6 - G5) in the direction of arrow A3 along the crankshaft 111 while rotating. Thus, the distance between the stator 121 and the rotor 122 in the extensional direction of the crankshaft 111 exceeds the distance between the stator 121 and the rotor 122 in the extensional direction of the crankshaft 111 shown in Fig. 12. Therefore, the air gap length of the magnetic path formed by the stator 121 and the rotor 122 increases from G5 (see Fig. 12) to G6 (see Fig. 13). Thus, the quantity of magnetic flux between the stator 121 and the rotor 122 is smaller when the air gap length of the magnetic path is G6 (see Fig. 13), as compared with the case where the air gap length of the magnetic path is G5 (see Fig. 12). Consequently, the quantity of generation of electromotive force in the power generator 120 (air gap length: G6) shown in Fig. 13 decreases below the quantity of generation of electromotive force in the power generator 120 (air gap length: G5) shown in Fig. 12.

According to the third embodiment, as hereinabove described, the air gap length is increased from G5 to G6 by moving the rotor 122 by the prescribed distance (G6 - G5) in the extensional direction (direction of arrow A3) of the crankshaft 111, whereby the quantity of change in the quantity of magnetic flux flowing through the magnetic path formed by the rotor 122 and the stator 121 can be increased similarly to the aforementioned first embodiment, also when the quantity (G6 - G5) of movement of the rotor 122 in the extensional direction (direction of arrow A3) of the crankshaft 111 is small. Thus, the quantity of movement of the rotor 122 can be reduced, whereby the power generator 120 may not be increased in size. Consequently, the power generator 120 capable of adjusting power generation characteristics while attaining downsizing can be obtained similarly to the aforementioned first embodiment.

According to the third embodiment, the air gap length between the rotor 122 and the stator 121 can be easily adjusted by moving the rotor 122 in the extensional direction (direction of arrow A3) of the crankshaft 111 with the gap adjusting mechanism portion 130. In this case, the air gap length between the rotor 122 and the stator 121 can be easily controlled by adjusting the quantity of rotation of the stepping motor 133 by moving the slider 132 in the extensional direction (direction of arrow A3) of the crankshaft 111 with the stepping motor 131 while moving the rotor 122 in the extensional direction (direction of arrow A3) of the crankshaft 111 with the slider 132.

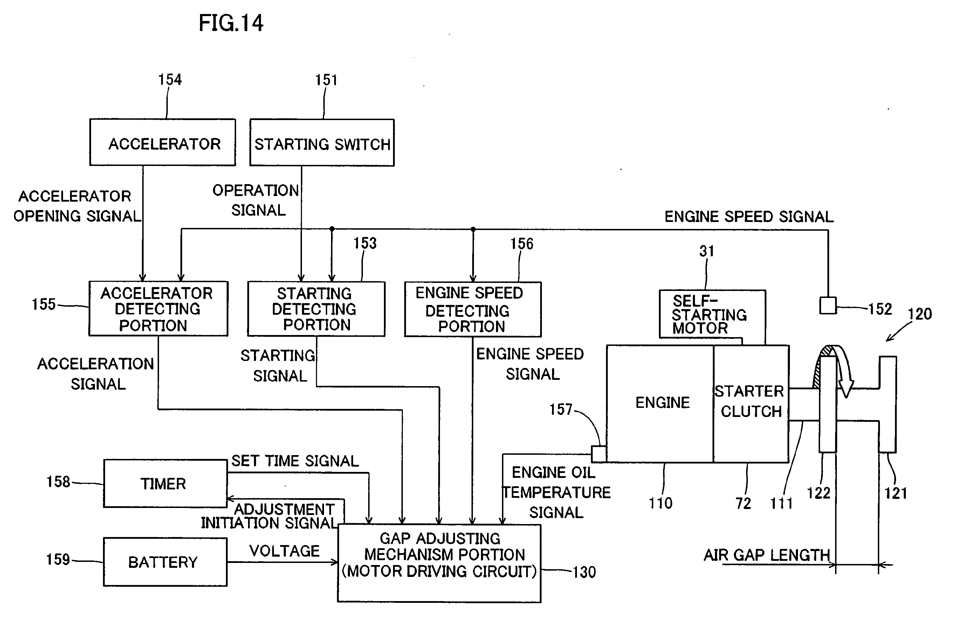

A method of controlling the gap adjusting mechanism portion 130 of the power generator 120 according to the third embodiment is now described with reference to Figs. 11 and 14.

Driving of the stepping motor 131 of the gap adjusting mechanism 130 shown in Fig. 11 is controlled by a motor driving circuit (not shown). As shown in Fig. 14, a starting signal, an acceleration signal, an engine speed signal, an engine oil temperature signal and a set time signal are input in the motor driving circuit for the gap adjusting mechanism portion 130. The starting signal, the acceleration signal, the engine speed signal and the engine oil temperature signal are signals indicating a vehicle state. Therefore, the quantity of rotation of the stepping motor 131 (rotor 131b) (see Fig. 11) constituting the gap adjusting mechanism portion 130 is adjusted on the basis of the aforementioned signals indicating the vehicle state. In other words, the rotor 122 is moved by the gap adjusting mechanism portion 130 by a prescribed quantity in the extensional direction of the crankshaft 111 on the basis of the aforementioned signals indicating the vehicle state. Consequently, the distance (air gap length) between the stator 121 and the rotor 122 in the extensional direction of the crankshaft 111 is adjusted on the basis of the aforementioned signals indicating the vehicle state.

The starting signal is generated by a start detecting portion 153 on the basis of an operation signal from a starting switch 151 and an engine speed signal from an engine revolution sensor 152. The starting switch 151 is operated by a user in starting of the automatic two-wheeler, so that the operation signal is output from the starting switch 151. Further, the revolution of the engine 110 is detected by the engine revolution sensor 152, so that the engine speed signal is output from the engine revolution sensor 152.

The acceleration signal is a signal indicating whether the automatic two-wheeler is in an accelerated traveling state or a low-speed traveling state, and is generated by an acceleration detecting portion 155 on the basis of an accelerator opening signal from an accelerator 154 and the engine speed signal from the engine revolution sensor 152. The accelerator opening signal is a signal indicating the opening of the accelerator 154 operated by the use in acceleration of the automatic two-wheeler.

The engine speed signal is generated by an engine speed detecting portion 156 on the basis of the engine speed signal from the engine revolution sensor 152.

The engine oil temperature signal is generated by an engine oil temperature sensor 157 on the basis of the temperature of engine oil of the engine 100.

The set time signal is a signal indicating a hold time for a prescribed air gap length, and is generated by a timer 158. This set time signal is generated by the timer 158 when an adjustment initiation signal indicating initiation of adjustment of the air gap length is input from the gap adjusting mechanism portion 130 in the timer 158.

As shown in Fig. 14, a battery 159 charged by a power generation voltage of the power generator 120 is mounted on the automatic two-wheeler according to the third embodiment mounted with the power generator 120. The battery 159 is enabled to supply a voltage to the aforementioned motor driving circuit.

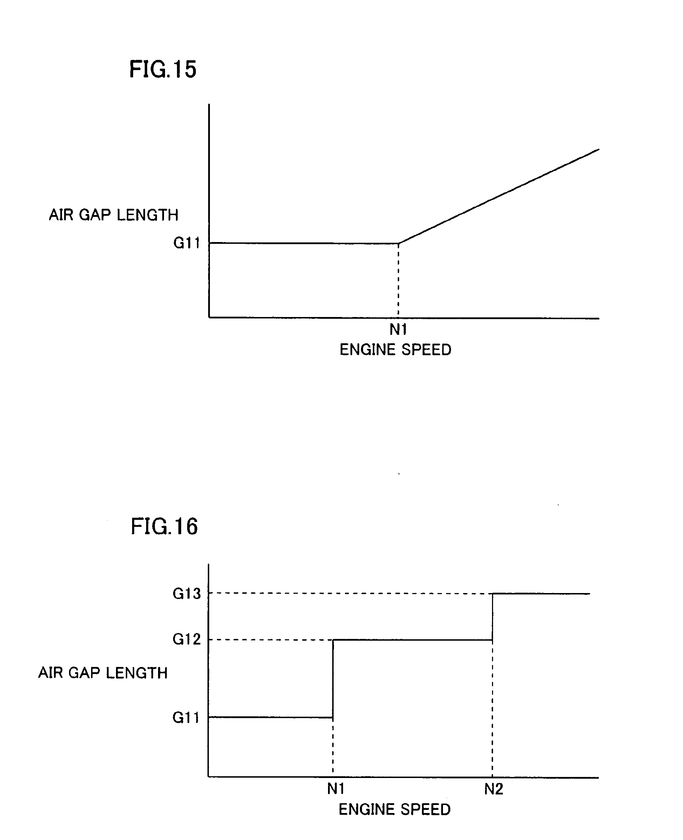

In the method of controlling the gap adjusting mechanism portion 130 of the power generator 120 according to the third embodiment, the air gap length can be adjusted to a value responsive to the vehicle state by controlling the quantity of rotation of the stepping motor 131 (rotor 131b) on the basis of the signals (the starting signal, the acceleration signal, the engine speed signal and the engine oil temperature signal) indicating the vehicle state, whereby damage of the performance of the engine 110 and the power generator 120 can be suppressed. More specifically, adjustment of the air gap length shown in Figs. 15 to 19 becomes possible.

As shown in Figs. 14 and 15, the air gap length is held at G11 when the speed of the engine 110 detected by the engine speed detecting portion 156 is lower than N1. When the speed of the engine 110 detected by the engine speed detecting portion 156 is in excess of N1, the air gap length is gradually increased from G11 in response to the speed of the engine 110. When adjusting the air gap length as shown in Fig. 15, the air gap length is so reduced that the quantity of magnetic flux increases if the engine 110 is in low-speed revolution (lower than N1), whereby the quantity of generation of electromagnetic force in the power generator 120 can be increased. When the engine 110 is in high-speed revolution (exceeding N1), the air gap length is so increased that the quantity of magnetic flux decreases, whereby a load with respect to revolution of the engine 110 can be reduced. Thus, the revolution state of the engine 110 revolving at a high speed can be stabilized. When the engine 110 is in high-speed revolution, further, the air gap length is so increased that the quantity of magnetic flux decreases, whereby occurrence of iron loss can be suppressed. Thus, it is possible to suppress such inconvenience that power generation efficiency of the power generator 120 lowers due to occurrence of iron loss.

When the speed of the engine 110 detected by the engine speed detecting portion 156 is lower than N1, the air gap length is held at G11, as shown in Figs. 14 and 16. When the speed of the engine 110 detected by the engine speed detecting portion 156 is at least N1 and not more than N2, the air gap length is held at G12 larger than G11. When the speed of the engine 110 detected by the engine speed detecting portion 156 is larger than N2, the air gap length is held at G13 larger than G12. When adjusting the air gap length stepwise as shown in Fig. 16, an effect similar to that of the method of adjusting the air gap length shown in Fig. 15 can be attained.

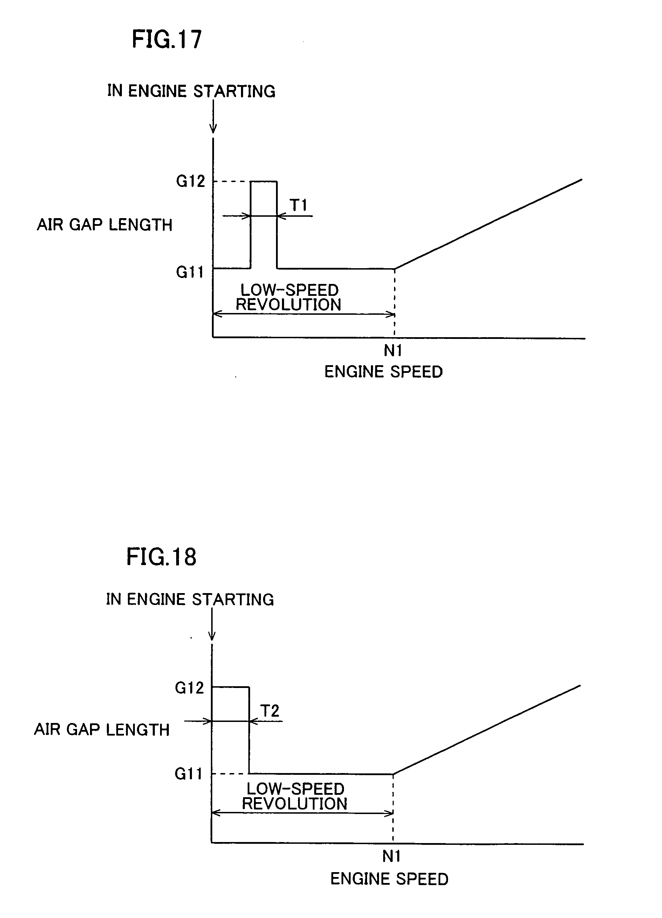

When the air gap length in starting of the engine 110 is G11, the air gap length is held at G12 larger than G11 for a prescribed period T1 in a low-speed revolution period when the speed of the engine 110 detected by the engine speed detecting portion 156 is lower than N1, as shown in Figs. 14 and 17. When warming up the engine 110 by low-speed revolution, the air gap length is held at G12 larger than G11 for the prescribed period T1 in a period (period of warming up) when the temperature of the engine oil detected by the oil temperature sensor 157 is low. The period T1 for holding the air gap length at G12 is set by the timer 158. When adjusting the air gap length as shown in Fig. 17, the quantity of magnetic flux decreases for the prescribed period T1 in the period of low-speed revolution (warming up) of the engine 110, whereby the load with respect to revolution of the engine 110 can be reduced. Thus, the revolution state of the engine 110 in the period of low-speed revolution (warming up) can be stabilized. Further, the air gap length is so reduced that the quantity of magnetic flux flowing through the magnetic flux increases in the period of low-speed revolution (warming up) other than the prescribed period T1, whereby the quantity of generation of electromotive force in the power generator 120 can be increased.

If the operation signal from the starting switch 151 is detected by the starting detecting portion 153 when the air gap length in starting of the engine 110 is G12 larger than G11, the air gap length is held at G12 for a prescribed period T2 from starting of the engine 110, as shown in Figs. 14 and 18. The period T2 for holding the air gap length at G12 is set by the timer 158. When adjusting the air gap length as shown in Fig. 18, an effect similar to that of the method of adjusting the air gap length shown in Fig. 17 can be attained.

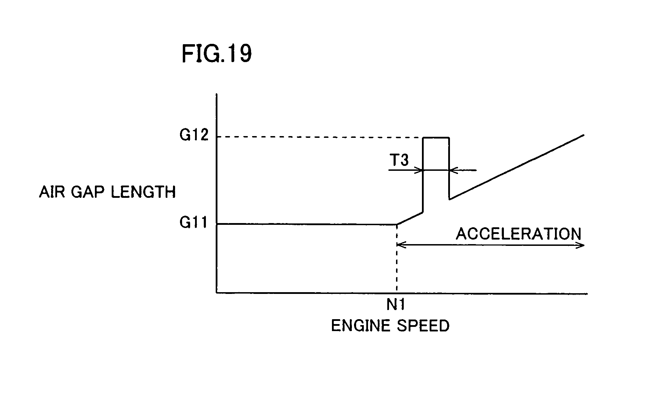

When the vehicle state is determined as accelerated traveling by the acceleration detecting portion 155, the air gap length is held at G12 larger than G11 for a prescribed period T3 in an initial stage of acceleration, as shown in Figs. 14 and 19. The period T3 for holding the air gap length at G12 is set by the time 158. When adjusting the air gap length as shown in Fig. 19, the quantity of magnetic flux decreases for the prescribed period T3 during accelerated traveling, whereby the load with respect to revolution of the engine 110 can be reduced. Thus, acceleration performance can be improved. Further, the quantity of magnetic flux decreases for the prescribed period T3 during accelerated traveling, whereby occurrence of iron loss can be suppressed. Thus, it is possible to suppress occurrence of such inconvenience that power generation efficiency of the power generator 120 lowers due to occurrence of iron loss.

(Fourth Embodiment)

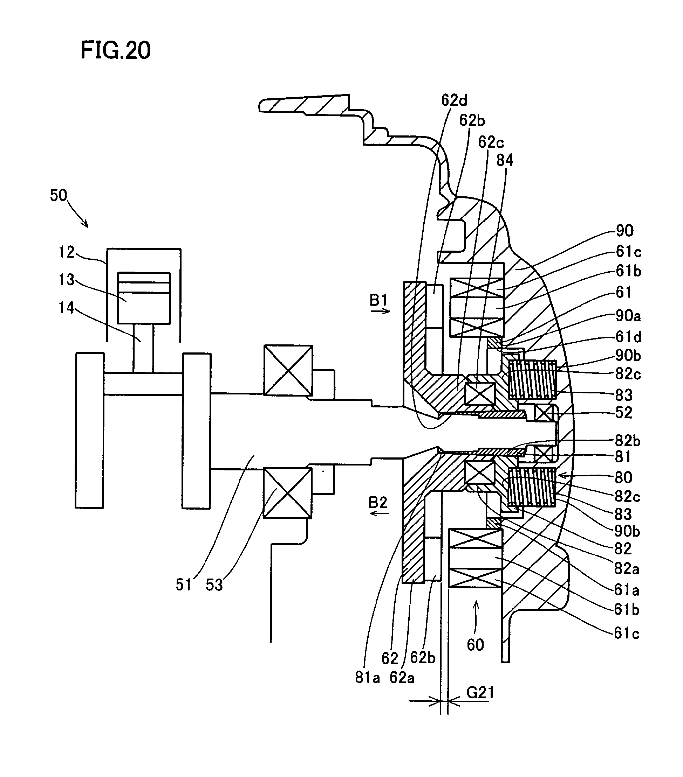

Referring to Fig. 20, an example of making the power generator 60 of the aforementioned second embodiment function also as a starter for an engine 50 is described in this fourth embodiment.

In other words, an automatic two-wheeler (not shown) according to this fourth embodiment has such a structure that no engine starting mechanism portion 70 is mounted in the structure of the second embodiment shown in Fig. 9, as shown in Fig. 20. The remaining structure of the fourth embodiment is similar to that of the aforementioned second embodiment.

A method of adjusting an air gap length in the power generator 60 according to the fourth embodiment is now described with reference to Figs. 20 to 22.

When starting the engine 50 with the power generator 60 according to the fourth embodiment shown in Fig. 20, a driving current supplied to the power generator 60 (coils 61c of a stator 61) is so set that the torque output of the power generator 60 increases.

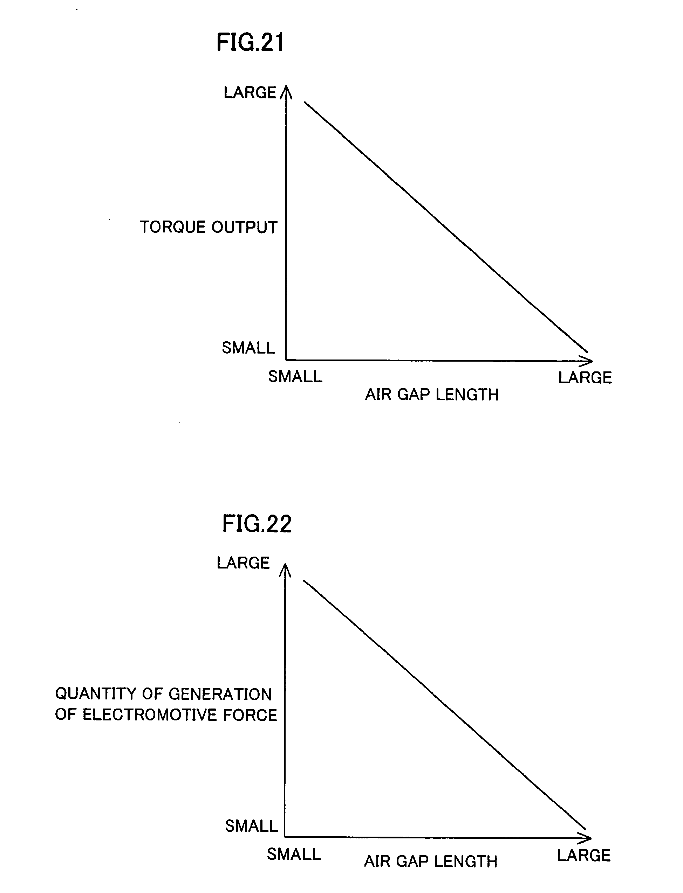

More specifically, the driving current supplied to the power generator 60 is so set that magnet suction force N1 in a direction of arrow B1 generated between the stator 61 and a rotor 62, thrust force N2 in the direction of arrow B1 generated by rotation of the rotor 62 and urging force N3 of a spring member 83 generated in a direction of arrow B2 are N1 + N2 > N3 according to the fourth embodiment, as shown in Fig. 20. The thrust force N2 of the rotor 62 in the direction of arrow B1 is generated by occurrence of torque difference between the rotor 62 and a crankshaft 51 when the rotor 62 rotates in starting of the engine 50. Thus, the rotor 62 moves in the direction of arrow B1 against the urging force N3 of the spring member 83 in the direction of arrow B2, whereby the distance (air gap length: G21) between the rotor 62 and the stator 61 in the extensional direction of the crankshaft 51 decreases. In this case, the quantity of magnetic flux between the stator 61 and the rotor 62 increases. In other words, the torque output of the power generator 60 increases as shown in Fig. 21, whereby the engine 50 is started by the power generator 60. In this case, further, the quantity of generation of electromotive force in the power generator 60 increases as shown in Fig. 22.

In the state where the engine 50 (crankshaft 51) revolves at a constant speed after starting of the engine 50 as shown in Fig. 20, no torque difference arises between the rotor 62 and the crankshaft 51, whereby the aforementioned relation between the magnet suction force N1, the thrust force N2 and the urging force N3 by the spring member 83 is N1 + N2 < N3. Thus, the rotor 62 moves in the direction of arrow B2 from the state in starting of the engine 50 in the state where the engine 50 (crankshaft 51) revolves at the constant speed, whereby the distance (air gap length: G21) between the rotor 62 and the stator 61 in the extensional direction of the crankshaft 51 increases as compared with that in starting of the engine 50. In this case, the quantity of magnetic flux between the stator 61 and the rotor 62 decreases. In other words, the torque output of the power generator 60 lowers as shown in Fig. 21. Further, the quantity of generation of electromotive force in the power generator 60 decreases as shown in Fig. 22.

According to the fourth embodiment, as hereinabove described, the engine 50 is so started with the power generator 60 that there is no need to provide an engine starting mechanism portion for starting the engine 50, whereby the structure of the automatic two-wheeler can be simplified.

According to the fourth embodiment, further, the quantity of magnetic flux between the rotor 62 and the stator 61 can be increased in starting of the engine 50 and the quantity of magnetic flux between the rotor 62 and the stator 61 can be reduced after starting of the engine 50 by reducing the air gap length (G21) between the rotor 62 and the stator 61 in starting of the engine 50 and increasing the air gap length (G21) between the rotor 62 and the stator 61 after starting of the engine 50. Thus, the torque output of the power generator 60 can be increased in starting of the engine 50. After starting of the engine 50, on the other hand, it is possible to suppress occurrence of such inconvenience that the load with respect to revolution of the engine 50 increases due to increase of the quantity of magnetic flux between the rotor 62 and the stator 61. When revolving the engine 50 at a high speed after starting of the engine 50, it is possible to suppress such inconvenience that power generation efficiency lowers due to occurrence of iron loss resulting from increase of the quantity of magnetic flux between the rotor 62 and the stator 61.

The remaining effects of the fourth embodiment are similar to those of the aforementioned second embodiment.

(Fifth Embodiment)

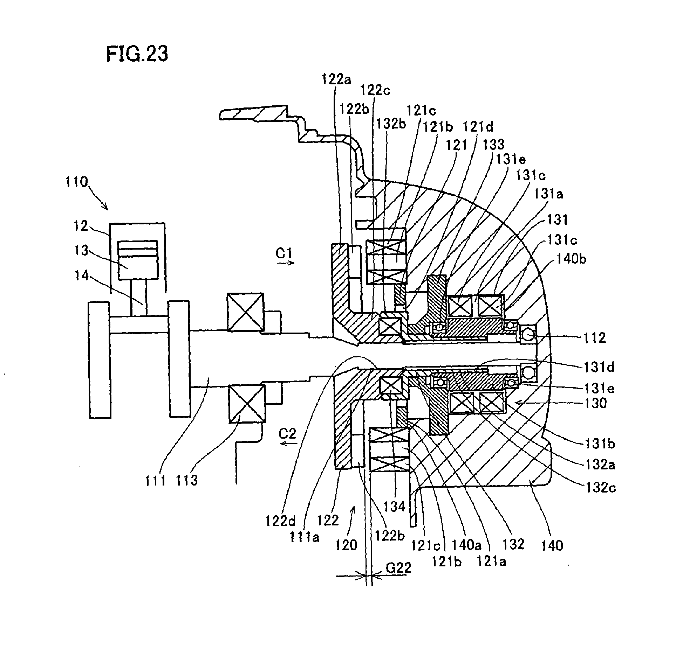

Referring to Fig. 23, an example of making the power generator 120 of the aforementioned third embodiment function also as a starter for an engine 110 is described in this fifth embodiment.

In other words, an automatic two-wheeler (not shown) according to this fifth embodiment has such a structure that no engine starting portion 70 is mounted in the structure of the third embodiment shown in Fig. 11, as shown in Fig. 23. The remaining structure of the fifth embodiment is similar to that of the aforementioned third embodiment.

A method of adjusting an air gap length in the power generator 120 according to the fifth embodiment shown in Fig. 23 is now described.

When starting the engine 110 with the power generator 120 according to the fifth embodiment shown in Fig.

23, the distance (air gap length: G22) between a rotor 122 and a stator 121 in the extensional direction of a crankshaft 111 is so adjusted that the torque output of the power generator 120 increases.

More specifically, the rotor 122 is moved in a direction of arrow C1 with a gap adjusting mechanism portion 130 so that the distance between the rotor 122 and the stator 122 in the extensional direction of the crankshaft 111 decreases in the fifth embodiment, as shown in Fig. 23. Thus, the air gap length (G22) between the rotor 122 and the stator 122 so decreases that the quantity of magnetic flux between the stator 121 and the rotor 122 increases. Therefore, the torque output of the power generator 120 so increases that the engine 110 is started by the power generator 120, as in the fourth embodiment shown in Fig. 21. Further, the quantity of generation of electromotive force in the power generator 120 increases as in the fourth embodiment shown in Fig. 22.

After starting of the engine 110, the rotor 122 is moved in a direction of arrow C2 with the gap adjusting mechanism 130 so that the distance between the rotor 122 and the stator 121 in the extensional direction of the crankshaft 111 increases, as shown in Fig. 23. Thus, the air gap length (G22) between the rotor 122 and the stator 121 so increases that the quantity of magnetic flux between the stator 121 and the rotor 122 decreases. Therefore, the torque output of the power generator 120 lowers similarly to the case of the fourth embodiment shown in Fig. 21. In this case, further, the quantity of generation of electromotive force in the power generator 120 decreases similarly to the case of the fourth embodiment shown in Fig. 22.

According to the fifth embodiment, as hereinabove described, the engine 110 is so started with the power generator 120 that there is no need to provide an engine starting mechanism portion for starting the engine 110 similarly to the aforementioned fourth embodiment, whereby the structure of the automatic two-wheeler can be simplified.

According to the fifth embodiment, further, the torque output of the power generator 120 can be increased in starting of the engine 110 similarly to the aforementioned fourth embodiment, by reducing the air gap length (G22) between the rotor 122 and the stator 122 in starting of the engine 110 while increasing the air gap length (G22) between the rotor 122 and the stator 121 after starting of the engine 110. After starting of the engine 110, on the other hand, it is possible to suppress such inconvenience that a load with respect to revolution of the engine 110 increases due to increase of the quantity of magnetic flux between the rotor 122 and the stator 122. When revolving the engine 110 at a high speed after starting of the engine 110, it is possible to suppress occurrence of such inconvenience that power generation efficiency lowers due to occurrence of iron loss resulting from increase of the quantity of magnetic flux between the rotor 122 and the stator 121.

The remaining effects of the fifth embodiment are similar to those of the aforementioned third embodiment.

(Sixth Embodiment)

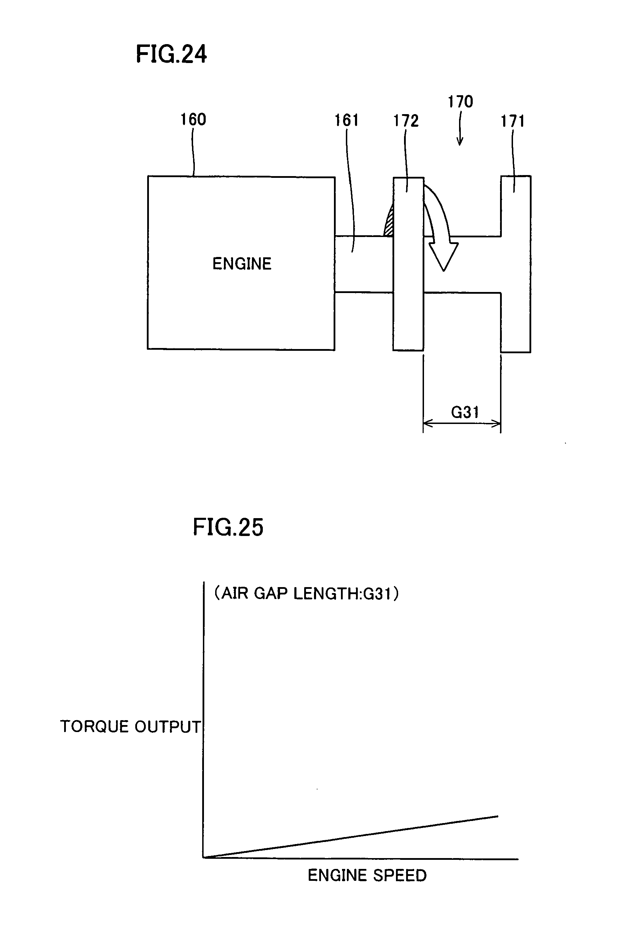

Referring to Fig. 24, a case of mounting a rotating electric machine according to the present invention on a hybrid vehicle dissimilarly to the aforementioned first to fifth embodiments is described in this sixth embodiment.

A hybrid vehicle (not shown) according to this sixth embodiment has a structure similar to that of the automatic two-wheeler 100 according to the first embodiment shown in Fig. 1. Further, the hybrid vehicle according to the sixth embodiment comprises an engine 160 including a crankshaft 161 and an electric motor 170, as shown in Fig. 24. The crankshaft 161 is an example of the "rotating shaft" in the present invention, and the electric motor 170 is an example of the "rotating electric machine" in the present invention.

According to the sixth embodiment, the electric motor 170 is constituted of a stator 171, a rotor 172 and an unillustrated gap adjusting mechanism portion. In the electric motor 170, the aforementioned crankshaft 161 is employed as a rotating shaft. The electric motor 170 has such an axial gap type structure that the stator 171 and the rotor 172 are opposed to each other at a prescribed interval in the extensional direction of the crankshaft 161. The stator 171 is fixed to an unillustrated case, while the rotor 172 is enabled to corotate with the crankshaft 161. Further, the rotor 172 is enabled to move in the extensional direction of the crankshaft 161. Movement of the rotor 172 in the extensional direction of the crankshaft 161 is performed with the unillustrated gap adjusting mechanism portion.

In the electric motor 170 according to the sixth embodiment, a magnetic path is formed by the stator 171 and the rotor 172. In this case, the distance between the stator 171 and the rotor 172 in the extensional direction of the crankshaft 161 is an air gap length functioning as magnetic resistance. In other words, the air gap length is G31 in Fig. 24. The rotor 172 is moved by the unillustrated gap adjusting mechanism portion in the extensional direction of the crankshaft 161, so that adjustment of the air gap length is performed.

A method of adjusting the air gap length in the electric motor 170 according to the sixth embodiment is now described with reference to Figs. 24 to 27.

When applying no power of the electric motor 170 to the engine 160, the distance (air gap length: G31) between the stator 171 and the rotor 172 in the extensional direction of the crankshaft 161 is adjusted to increase, as shown in Fig. 24. Thus, the quantity of magnetic flux between the stator 171 and the rotor 172 decreases. In this case, the torque output of the electric motor 170 with respect to the speed of the engine 160 lowers, as shown in Fig. 25.

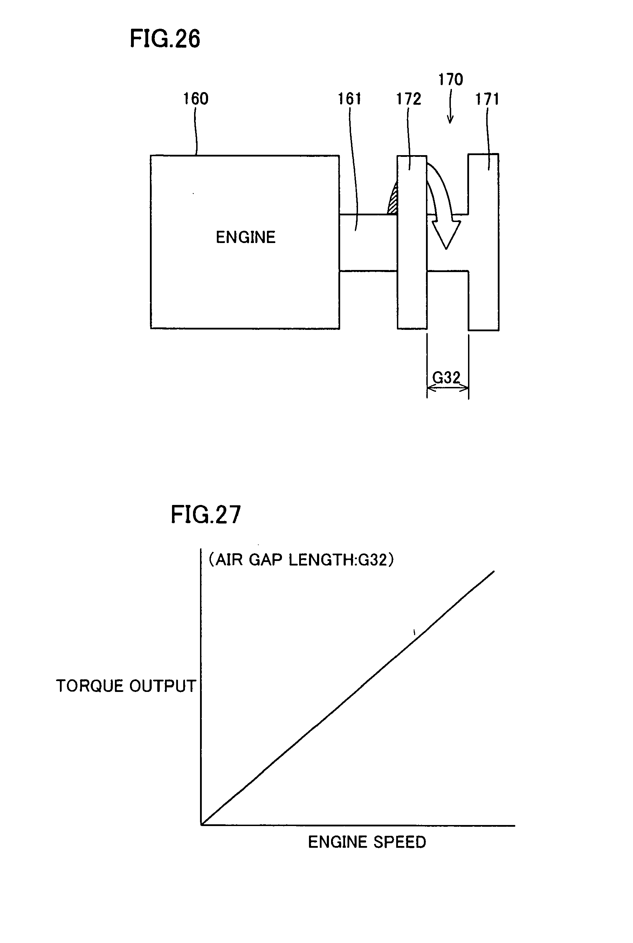

When applying the power of the electric motor 170 to the engine 160, the distance (air gap length: G32) between the stator 171 and the rotor 172 in the extensional direction of the crankshaft 161 is adjusted decrease below the distance (air gap length: G31) between the stator 171 and the rotor 172 in the extensional direction of the crankshaft 161 shown in Fig. 24, as shown in Fig. 26. Thus, the quantity of magnetic flux between the stator 171 and the rotor 172 increases. In this case, the torque output of the electric motor 170 with respect to the speed of the engine 160 increases as compared with the case where the air gap length is G31 shown in Fig. 25 as shown in Fig. 27, whereby the power of the electric motor 170 is applied to the engine 160.

According to the sixth embodiment, as hereinabove described, the air gap length is adjusted by moving the rotor 172 by a prescribed distance in the extensional direction of the crankshaft 161, whereby the quantity of change in the quantity of magnetic flux between the rotor 172 and the stator 171 can be increased similarly to the aforementioned first embodiment, also when the quantity of movement of the rotor 172 in the extensional direction of the crankshaft 161 is small. Thus, the quantity of movement of the rotor 172 can be reduced, whereby the electric motor 170 may not be increased in size. Consequently, the electric motor 170 capable of adjusting power generation characteristics and torque output characteristics while attaining downsizing can be obtained similarly to the aforementioned first embodiment.

According to the sixth embodiment, the air gap length (G32) is reduced when applying the power of the electric motor 170 to the engine 160 so that the quantity of magnetic flux between the stator 171 and the rotor 172 increases, whereby the torque output can be increased. Thus, there is no need to increase the power supplied to the electric motor 170 in order to increase the torque output of the electric motor 170, whereby the power supplied to the electric motor 170 can be inhibited from increase when applying the power of the electric motor 170 to the engine 160. When applying no power of the electric motor 170 to the engine 160, the air gap length (G31) is so increased that the quantity of magnetic flux between the stator 171 and the rotor 172 decreases, whereby a load with respect to revolution of the engine 160 can be inhibited from increase.

A method of transmitting the power of the electric motor 170 according to the sixth embodiment to a tire 180 is now described with reference to Figs. 24, 26 and 28.

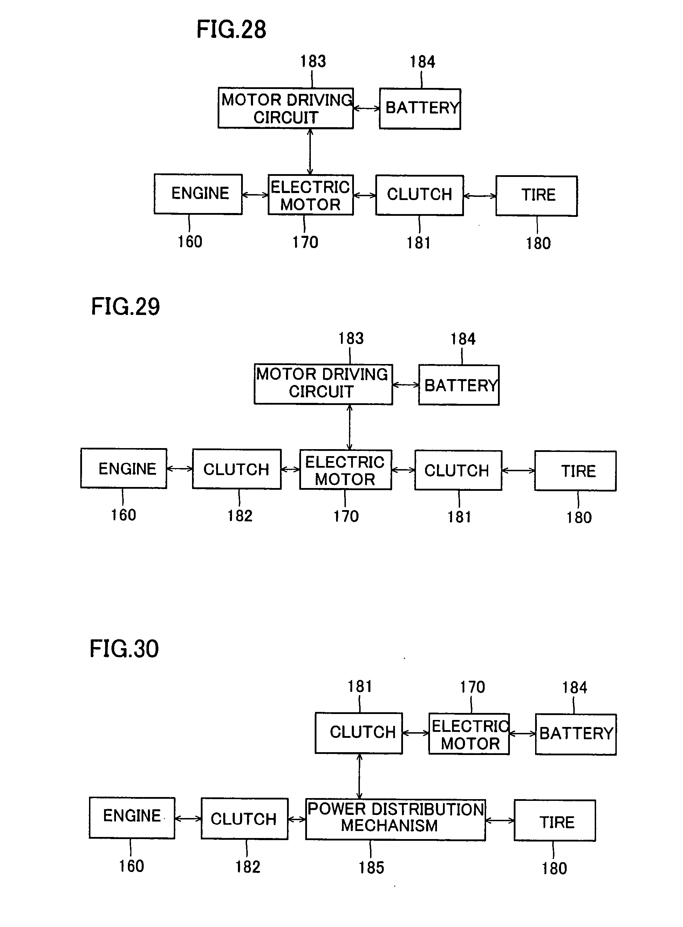

When transmitting the power of the engine 160 to the tire 180 without applying the power of the electric motor 170, the air gap length (G31) between the stator 171 and the rotor 172 is adjusted to increase thereby reducing the quantity of magnetic flux between the stator 171 and the rotor 172, as shown in Figs. 24 and 28. Thus, the torque output of the electric motor 170 lowers. Consequently, substantially only the power of the engine 160 is transmitted to the tire 180 through a clutch 181. When applying the power of the electric motor 170 to the engine 160, the quantity of magnetic flux between the stator 171 and the rotor 172 is increased by adjusting the air gap length (G32) between the stator 171 and the rotor 172 to decrease, as shown in Figs. 26 and 28. Thus, the torque output of the electric motor 170 increases, whereby the power of the electric motor 170 is applied to the engine 160. Consequently, the power of the engine 160 and the power of the electric motor 170 are transmitted to the tire 180 through the clutch 181. Driving of the electric motor 170 is controlled by a motor driving circuit 183, while power is supplied to the electric motor 170 from a battery 184 through the motor driving circuit 183.

When another clutch 182 is provided between the engine 160 and the electric motor 170 as shown in Fig. 29, it is possible to transmit only the power of the electric motor 170 to the tire 180 through the clutch 181 by canceling coupling between the engine 160 and the electric motor 170 with the clutch 182.

According to the sixth embodiment, as hereinabove described, the quantity of magnetic flux between the stator 171 and the rotor 172 can be reduced by adjusting the air gap length (G31) between the stator 171 and the rotor 172 to increase when transmitting the power of the engine 160 to the tire 180 without applying the power of the electric motor 170, whereby the torque output of the electric motor 170 can be lowered. Thus, substantially only the power of the engine 160 can be transmitted to the tire 180 when transmitting the power of the engine 160 to the tire 180 without applying the power of the electric motor 170.

If the electric motor 170 is fixed in a state where the air gap length is small, the torque output of the electric motor 170 is regularly in a high state, and hence a power distribution mechanism 185 shown in Fig. 30 is necessary in order to transmit the power of the engine 160 to the tire 180 without applying the power of the electric motor 170. The power distribution mechanism 185 has a function of canceling the coupling between the engine 160 and the electric motor 170. Therefore, the stator 171 and the rotor 172 are so formed that the air gap length is adjustable as in the sixth embodiment, so that the power distribution mechanism 185 shown in Fig. 30 is unnecessary.

(Seventh Embodiment)

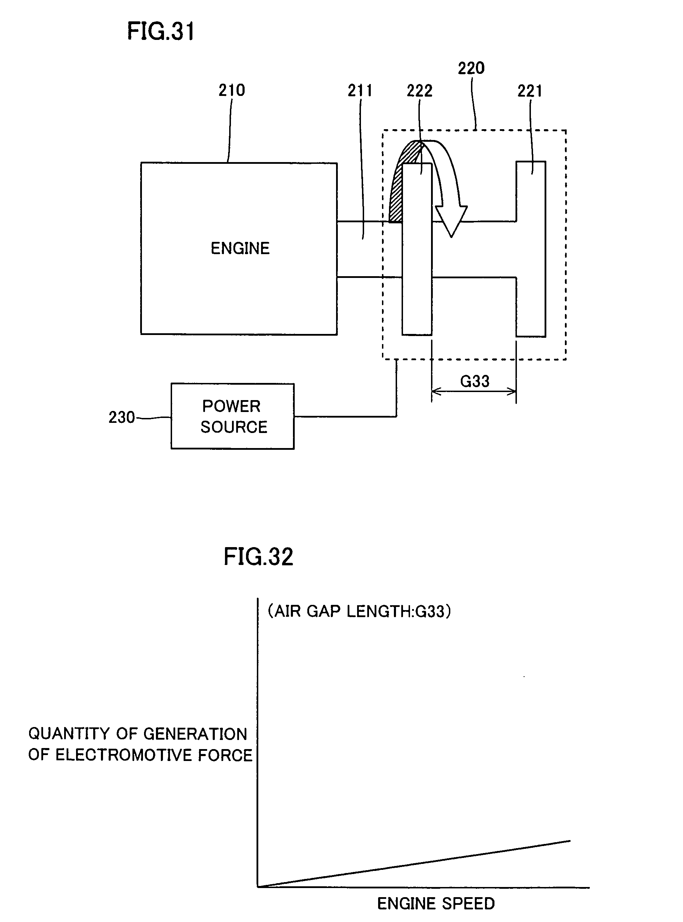

Referring to Fig. 31, a case of providing a power source charged by power generation of a power generator dissimilarly to the aforementioned first to sixth embodiments is described in this seventh embodiment.

According to this seventh embodiment, an engine 210 including a crankshaft 211, a power generator 220 and a power source 230 are mounted on an automatic two-wheeler (not shown) similar to the automatic two-wheeler 100 according to the first embodiment shown in Fig. 1, as shown in Fig. 31. The crankshaft 211 is an example of the "rotating shaft" in the present invention, and the power generator 220 is an example of the "rotating electric machine" in the present invention.

According to the seventh embodiment, the power generator 220 is constituted of a stator 221, a rotor 222 and an unillustrated gap adjusting mechanism portion. In the power generator 220, the aforementioned crankshaft 211 is employed as a rotating shaft. Further, the power generator 220 has such an axial gap type structure that the stator 221 and the rotor 222 are opposed to each other at a prescribed interval in the extensional direction of the crankshaft 211. The stator 221 is fixed to an unillustrated case, while the rotor 222 is enabled to corotate with the crankshaft 211. Further, the rotor 222 is enabled to move in the extensional direction of the crankshaft 211. Movement of the rotor 222 in the extensional direction of the crankshaft 211 is performed by the unillustrated gap adjusting mechanism portion. The power source 230 is charged by power generation of the power generator 220.

In the power generator 220 according to the seventh embodiment, a magnetic path is formed by the stator 221 and the rotor 222. In this case, the distance between the stator 221 and the rotor 222 in the extensional direction of the crankshaft 211 is an air gap length functioning as magnetic resistance. In other words, the air gap length is G33 in Fig. 31. The rotor 222 is moved in the extensional direction of the crankshaft 211 by the unillustrated gap adjusting mechanism portion, so that adjustment of the air gap length is performed.

A method of adjusting the air gap length in the power generator 220 according to the seventh embodiment is now described with reference to Figs. 31 to 34.

In a case of reducing the quantity of generation of electromotive force in the power generator 220, the distance (air gap length: G33) between the stator 221 and the rotor 222 in the extensional direction of the crankshaft 211 is adjusted to increase, as shown in Fig. 31. Thus, the quantity of magnetic flux between the stator 221 and the rotor 222 decreases. In this case, the quantity of generation of electromotive force in the power generator 220 with respect to the speed of the engine 210 decreases, as shown in Fig. 32. Thus, charging to the power source 230 is suppressed.

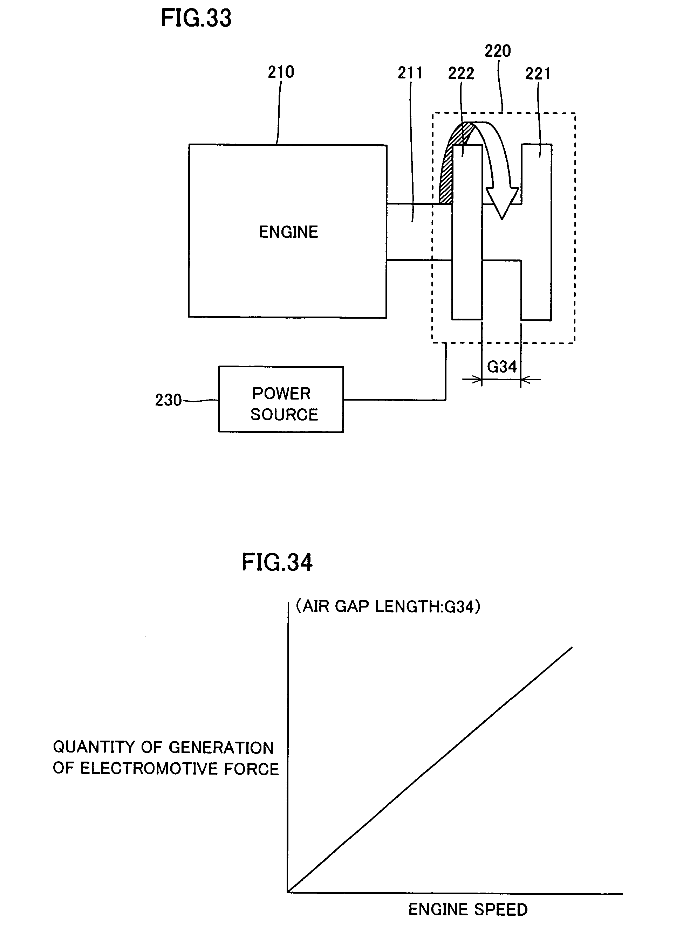

In a case of increasing the quantity of generation of electromotive force in the power generator 222, the distance (air gap length: G34) between the stator 221 and the rotor 222 in the extensional direction of the crankshaft 211 is adjusted to decrease below the distance (air gap length G33) between the stator 221 and the rotor 222 in the extensional direction of the crankshaft 211 shown in Fig. 31, as shown in Fig. 33. Thus, the quantity of magnetic flux between the stator 221 and the rotor 222 increases. In this case, the quantity of generation of electromotive force in the power generator 220 with respect to the speed of the engine 210 increases as compared with the case where the air gap length is G33 shown in Fig. 32, as shown in Fig. 34. Thus, charging to the power source 230 increases.

According to the seventh embodiment, as hereinabove described, the air gap length is adjusted by moving the rotor 222 by a prescribed distance in the extensional direction of the crankshaft 211, whereby the quantity of change in the quantity of magnetic flux between the rotor 222 and the stator 221 can be increased similarly to the aforementioned embodiment, also when the quantity of movement of the rotor 222 in the extensional direction of the crankshaft 211 is small. Thus, the quantity of movement of the rotor 222 can be reduced, whereby the power generator 220 may not be increased in size. Consequently, the power generator 220 capable of adjusting power generation characteristics can be obtained while attaining downsizing, similarly to the aforementioned first embodiment.

According to the seventh embodiment, the stator 221 and the rotor 222 constituting the power generator 220 are so formed that the air gap length is adjustable, whereby the quantity of generation of electromotive force can be easily increased by increase of the quantity of magnetic flux and charging to the power source 230 can be excellently performed by reducing the air gap length in a case of application to an automatic two-wheeler requiring high power generation efficiency. In a case of application to an automatic two-wheeler not requiring high power generation efficiency or in a case of suppressing charging to the power source 230, the quantity of generation of electromotive force can be easily reduced through reduction of the quantity of magnetic flux by increasing the air gap length. If increasing the air gap length when the engine 210 is in high-speed revolution, iron loss can be reduced due to reduction of the quantity of magnetic flux, whereby it is possible to suppress occurrence of such inconvenience that the power generation efficiency of the power generator 220 lowers due to occurrence of iron loss.

(Eighth Embodiment)

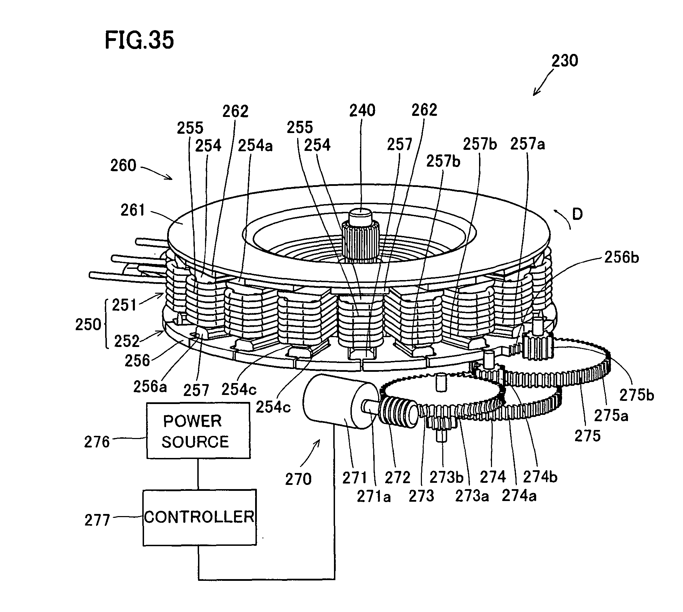

Referring to Figs. 35 to 37 and 39 to 41, a case of dividing a stator constituting a rotating electric machine into two dissimilarly to the aforementioned first to seventh embodiments is described in this seventh embodiment.

A rotating electric machine 230 according to this eighth embodiment comprises a rotating shaft 240, a stator 250, a rotor 260 and a rotation driving portion 270, as shown in Fig. 35. The rotating electric machine 230 according to the eighth embodiment has such an axial gap type structure that the stator 250 and the rotor 260 are opposed to each other at a prescribed interval in the extensional direction of the rotating shaft 240. When mounting the rotating electric machine 230 according to the eighth embodiment on the automatic two-wheeler 100 according to the first embodiment shown in Fig. 1, the rotating shaft 240 functions as a crankshaft.

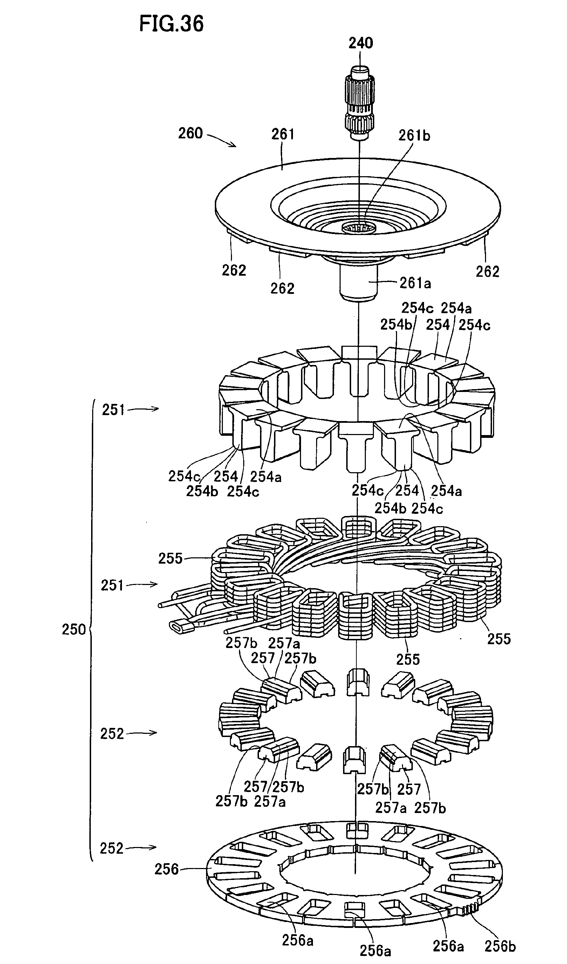

According to the eighth embodiment, the stator 250 is divided into two, i.e., a first stator 251 and a second stator 252, as shown in Figs. 35 and 36. The first stator 251 and the second stator 252 are opposed to each other at a prescribed interval in the extensional direction of the rotating shaft 240, while the first stator 251 is opposed to the rotor 260. The second stator 252 is enabled to rotate in the rotational direction (direction of arrow D) of the rotor 260 about the axial core of the rotating shaft 240 serving as the rotation center.

As the specific structure of the stator 250, the first stator 251 includes a plurality of first teeth 254 and a plurality of coils 255. The first teeth 254 are examples of the "first core members" in the present invention. The plurality of first teeth 254 are annularly arranged at a prescribed interval from each other. First end surfaces 254a of the first teeth 254 have a larger area than second end surfaces 254b (see Fig. 36) opposite to the first end surfaces 254a. Therefore, the interval between the first end surfaces 254a of adjacent first teeth 254 is smaller than the interval between the second end surfaces 254b. Further, the first end surfaces 254a of the first teeth 254 are opposed to the rotor 260. In addition, ends 254c (see Fig. 36) of the first teeth 254 closer to the second end surfaces 254b are chamfered. The plurality of coils 255 are mounted on the respective ones of the plurality of first teeth 254 respectively. The coils 255 are not mounted on portions of the first end surfaces 254a of the first teeth 254.

The second stator 252 includes a stator yoke 256 and a plurality of second teeth 257. The second teeth 257 are examples of the "second core members" in the present invention. The stator yoke 256 is annularly formed, and has a plurality of annularly arranged hole portions 256a. A gear engaging portion 256b is provided on a prescribed region of the outer peripheral surface of the stator yoke 256. The plurality of second teeth 257 are mounted on the respective ones of the annularly arranged plurality of hole portions 256a of the stator yoke 256 respectively, so that prescribed end surfaces 257a of the second teeth 257 protrude toward the first stator 251. Ends 257b of the second teeth 257 closer to the protruding end surfaces 257a are chamfered.

The rotor 260 includes a rotor yoke 261 and a plurality of magnets 262. The rotor 261 is formed in the shape of a disc, while a protrusion 261a protruding toward the stator 250 is formed on the central portion of the rotor yoke 261. A hole portion 261b is formed in the central portion of the rotor yoke 261. The rotating shaft 240 is fitted into this hole portion 261b of the rotor yoke 261, so that the rotor yoke 261 corotates with the rotating shaft 240. The plurality of magnets 262 include a plurality of magnets 262 of north poles and a plurality of magnets 262 of south poles, and are mounted on a surface of the rotor yoke 261 closer to the stator 250. In the plurality of magnets 262, the north poles and the south poles are alternately arranged at a prescribed interval along the circumferential direction of the discoid rotor yoke 261.

As shown in Fig. 35, the rotation driving portion 270 is provided for rotating the second stator 252 constituting the stator 250 in the rotational direction (direction of arrow D) of the rotor 260. This rotating driving portion 270 includes a motor 271, a worm gear 272 and gears 273, 274 and 275. The worm gear 272 is mounted on a rotating shaft 271a of the motor 271, and meshed with a large-diametral gear portion 273a of the gear 273. A large-diametral gear portion 274a of the gear 274 is meshed with a small-diametral gear portion 273a of the gear 273, while a small-diametral gear portion 274b of the gear 274 is meshed with a large-diametral gear portion 275a of the gear 275. Further, a small-diametral gear portion 275b of the gear 275 is meshed with the gear engaging portion 256b of the stator yoke 256 of the second stator 252. Thus, the power of the motor 271 is transmitted to the stator yoke 256 through the worm gear 272 and the gears 273 to 275, whereby the second stator 252 is rotated in the rotational direction (direction of arrow D) of the rotor 260. Power is supplied to the motor 271 from a power source 276 through a controller 277.

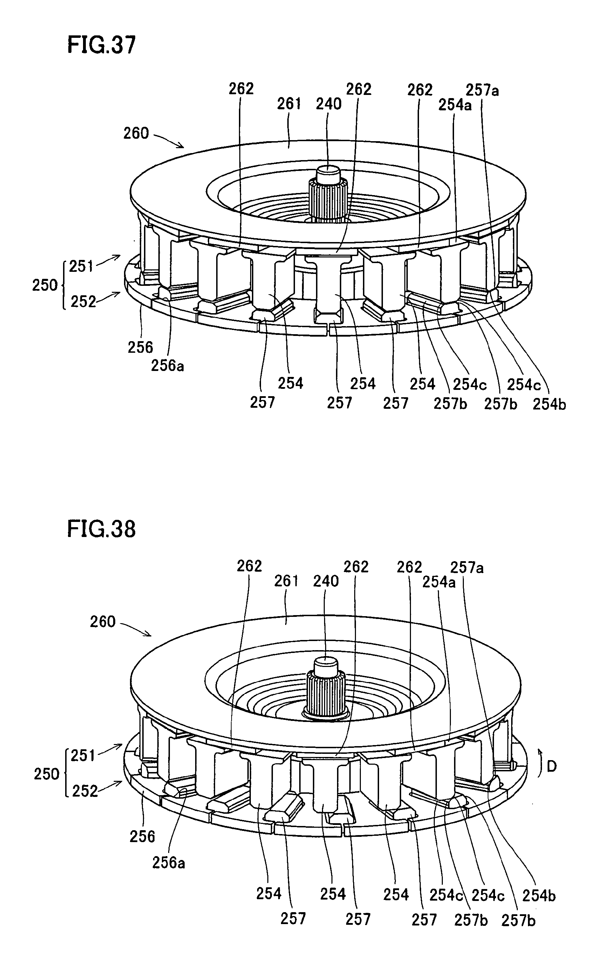

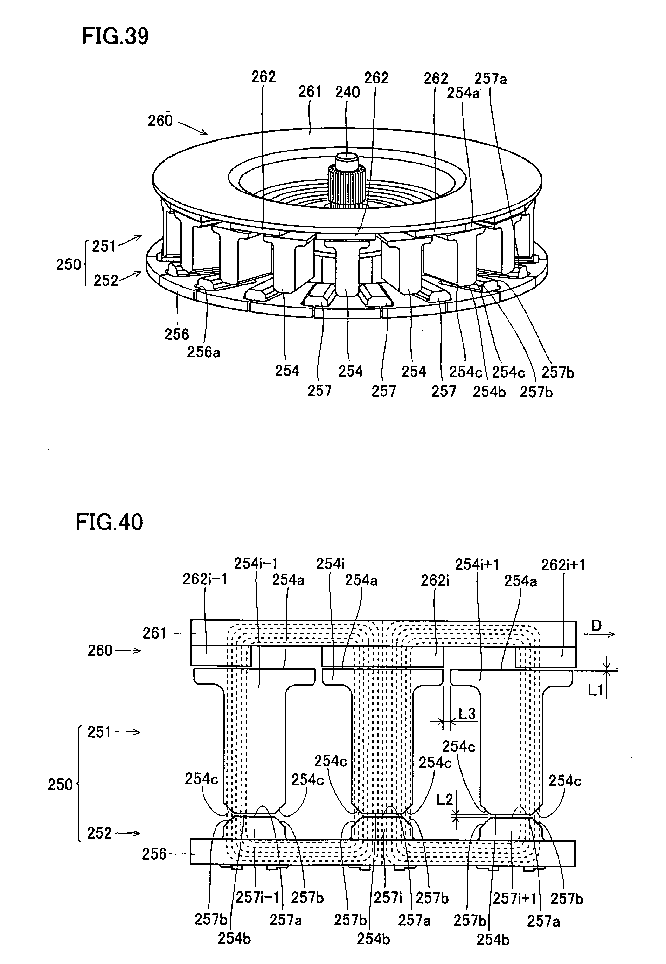

In the rotating electric machine 230 according to the eighth embodiment, magnetic paths (broken lines in Fig. 40) are formed by the rotor 260, the first stator 251 and the second stator 252 when the first teeth 254 and the second teeth 257 are opposite to each other, as shown in Figs. 37 and 40. When the first teeth 254 and the second teeth 257 are opposite to each other, the distance L1 between the first teeth 254 and the magnets 262 and the distance L2 between the first teeth 254 and the second teeth 257 are air gap lengths functioning as magnetic resistance with respect to the magnetic paths.

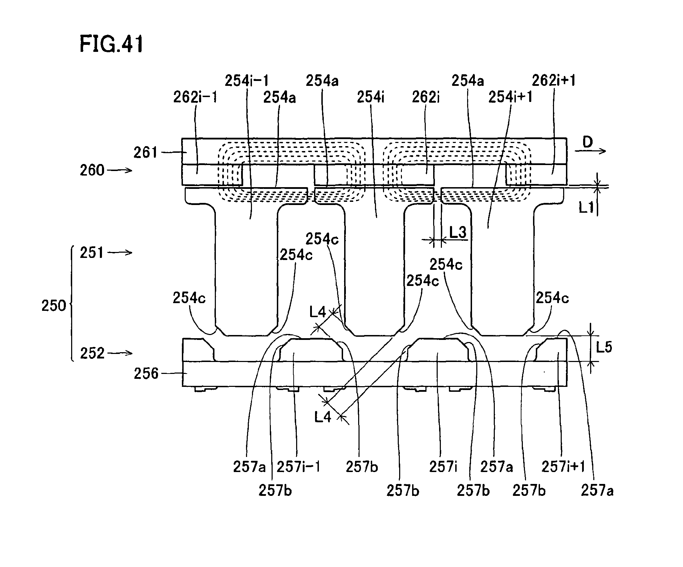

When the second teeth 257 move to positions not opposite to the first teeth 254, magnetic paths (broken lines in Fig. 41) are formed by the rotor 260 and the first stator 251, as shown in Figs. 39 and 41. When the second teeth 257 move to the positions not opposite to the first teeth 254, the distance L1 between the first teeth 254 and the magnets 262 and the distance L3 between the adjacent first teeth 254 on the sides of the end surfaces 254a are the air gap lengths functioning as magnetic resistance with respect to the magnetic paths.

Figs. 40 and 41 illustrate a prescribed magnet 262 as 262i and illustrate the magnet 262 adjacent to the prescribed magnet 262i in the direction of arrow D (rotational direction of the rotor 260) as 262i+1, while illustrating the magnet 262 adjacent to the prescribed magnet 262i in the direction opposite to the direction of arrow D as 262i-1. Further, these figures illustrate a prescribed first tooth 254 as 254i and illustrate the first tooth 254 adjacent to the prescribed first tooth 254i in the direction of arrow D as 254i+1, while illustrating the first tooth 254 adjacent to the prescribed first tooth 254i in the direction opposite to the direction of arrow D as 257i-1. In addition, the figures illustrate a prescribed second tooth 257 as 257i and illustrate the second tooth 257 adjacent to the prescribed second tooth 257i in the direction of arrow D as 257i+1, while illustrating the second tooth 257 adjacent to the prescribed second tooth 257i in the direction opposite to the direction of arrow D as 257i-1. Figs. 40 and 41 illustrate no coils 255, in order to simplify the drawings.

A method of adjusting the air gap lengths in the rotating electric machine 230 according to the eighth embodiment is now described with reference to Figs. 35 and 37 to 41.

In a case of rotating the rotating electric machine 230 with a high torque at a high speed, the second stator 252 is not rotated but held on a position of an initial state, as shown in Fig. 37. In other words, the second stator 252 is so held that the second teeth 257 are opposite to the first teeth 254. In this case, the magnetic paths (broken lines in Fig. 40) which are paths of magnetic flux are formed in the rotor 260, the first stator 251 and the second stator 252, as shown in Fig. 40.

When the second teeth 257 are opposite to the first teeth 254 as shown in Fig. 40, the distance (air gap length) L1 between the first teeth 254 and the magnets 262 is so extremely small that magnetic resistance between the first teeth 254 and the magnets 262 lowers. Further, the distance (air gap length) L2 between the first teeth 254 and the second teeth 257 is so extremely small that magnetic resistance between the first teeth 254 and the second teeth 257 lowers. The distance L1 between the first teeth 254 and the magnets 262 and the distance L2 between the first teeth 254 and the second teeth 257 are substantially identical distances.

On the other hand, the distance L3 between the adjacent first teeth 254 on the sides of the end surfaces 254a exceeds the distance (air gap length) L2 between the first teeth 254 and the second teeth 257. In other words, magnetic resistance between the adjacent first teeth 254 on the sides of the end surfaces 254a exceeds the magnetic resistance between the first teeth 254 and the second teeth 257. The distance L2 between the first teeth 254 and the second teeth 257 and the distance L3 between the adjacent first teeth 254 on the sides of the end surfaces 254a satisfy the relational expression $2 \times L2 < L3$.

Thus, magnetic flux generated between the magnet 262i (north pole, for example) and the magnet 262i-1 (south pole, for example) is hardly transmitted through the air gap between the first tooth 254i and the first tooth 254i-1 on the sides of the end surfaces 254a. Therefore, the magnetic flux generated between the magnet 262i and the magnet 262i-1 flows through the air gap between the magnet 262i and the first tooth 254i, the first tooth 254i, the air gap between the first tooth 254i and the second tooth 257i, the second tooth 257i, the stator yoke 256, the second tooth 257i-1, the air gap between the second tooth 257i-1 and the first tooth 254i-1, the first tooth 254i-1, the air gap between the first tooth 254i-1 and the magnet 262i-1 and the rotor yoke 261 in this order.

Further, magnetic flux generated between the magnet 262i (north pole, for example) and the magnet 262i+1 (south pole, for example) is hardly transmitted through the air gap between the first tooth 254i and the first tooth 254i+1 on the sides of the end surfaces 254a. Therefore, the magnetic flux generated between the magnet 262i and the magnet 262i+1 flows through the air gap between the magnet 262i and the first tooth 254i, the first tooth 254i, the air gap between the first tooth 254i and the second tooth 257i, the second tooth 257i, the stator yoke 256, the second tooth 257i+1, the air gap between second tooth 257i+1 and the first tooth 254i+1, the first tooth 254i+1, the air gap between the first tooth 254i+1 and the magnet 262i+1 and the rotor yoke 261 in this order.

When the magnet 262i becomes a south pole and the magnets 262i+1 and 262i-1 become north poles, the directions of flow of magnetic flux are reversed dissimilarly to the aforementioned case where the magnet 262i is a north pole and the magnets 262i+1 and 262i-1 are south poles.

When rotating the rotating electric machine 230 with a low torque at a high speed from the state of Fig. 37, the second stator 252 is rotated in the rotational direction (direction of arrow D) of the rotor 260 with the rotation driving portion 270 (see Fig. 35), as shown in Fig. 38. Thus, the second teeth 257 are moved to regions corresponding to the centers between the adjacent first teeth 254 so that the second teeth 257 are not opposite to the first teeth 254, as shown in Fig. 39. In this case, the magnetic paths (broken lines in Fig. 41) which are paths of magnetic flux are formed in the rotor 260 and the first stator 251, as shown in Fig. 41.

When the second teeth 257 are not opposite to the first teeth 254, the distance (air gap length) between the first teeth 254 and the second teeth 257 increases from L2 (see Fig. 40) to L4, as shown in Fig. 41. Therefore, the distance (air gap length) L3 between the adjacent first teeth 254 on the sides of the end surfaces 254a decreases below the distance (air gap length) L4 between the first teeth 254 and the second teeth 257. In other words, magnetic resistance between the adjacent first teeth 254 on the sides of the end surfaces 254a decreases below the magnetic resistance between the first teeth 254 and the second teeth 257.

The distance (air gap length) L5 between the first teeth 254 and the stator yoke 256 exceeds the distance (air gap length) L4 between the first teeth 254 and the second teeth 257. In other words, the magnetic resistance between the first teeth 254 and the stator yoke 256 exceeds the magnetic resistance between the first teeth 254 and the second teeth 257. Therefore, it is obvious that no magnetic path is formed between the first teeth 254 and the stator yoke 256, whereby the magnetic resistance between the first teeth 254 and the stator yoke 256 is ignorable.

Thus, the magnetic flux generated between the magnet 262i (north pole, for example) and the magnet 262i-1 (south pole, for example) flows through the air gap between the magnet 262i and the first tooth 254i, a portion of the first tooth 254i closer to the end surface 254a, the air gap between the first tooth 254i and the first tooth 254i-1 on the sides of the end surfaces 254a, a portion of the first tooth 254i-1 closer to the end surface 254a, the air gap between the first tooth 254i-1 and the magnet 262i-1 and the rotor yoke 261 in this order.

Further, the magnetic flux generated between the magnet 262i (north pole, for example) and the magnet 262i+1 (south pole, for example) flows through the air gap between the magnet 262i and the first tooth 254i, the portion of the first tooth 254i closer to the end surface 254a, the air gap between the first tooth 254i and the first tooth 254i+1 on the sides of the end surfaces 254a, a portion of the first tooth 254i+1 closer to the end surface 254a, the air gap between the first tooth 254i+1 and the magnet 262i+1 and the rotor yoke 261 in this order.

When the magnet 262i becomes a south pole and the magnets 262i+1 and 262i-1 become north poles, the directions of flow of magnetic flux are reversed dissimilarly to the aforementioned case where the magnet 262i is a north pole and the magnets 262i+1 and 262i-1 are south poles.

In other words, substantially no magnetic flux flows to portions of the first teeth 254 mounted with the coils 255 (see Fig. 35) in the case of rotating the rotating electric machine 30 with a low torque at a high speed in the eighth embodiment.

In the case where the second teeth 257 are opposite to the first teeth 254 shown in Fig. 40, the air gap length functioning as the magnetic resistance with respect to the magnetic paths is $2 \times L1 + 2 \times L2$. In the case where the second teeth 257 are not opposite to the first teeth 254 shown in Fig. 41, the air gap length functioning as the magnetic resistance with respect to the magnetic paths is $2 \times L1 + L3$. L2 and L3 satisfy the relational expression $2 \times L2 < L3$, whereby the air gap length functioning as the magnetic resistance with respect to the magnetic paths decreases in the case where the second teeth 257 are opposite to the first teeth 254 shown in Fig. 40 as compared with the case where the second teeth 257 are not opposite to the first teeth 254 shown in Fig. 41. Therefore, the quantity of magnetic flux increases in the case where the second teeth 257 are opposite to the first teeth 254 shown in Fig. 40 as compared with the case where the second teeth 257 are not opposite to the first teeth 254 shown in Fig. 41.

According to the eighth embodiment, as hereinabove described, the stator 250 is divided into two, i.e., the first stator 251 and the second stator 252 while the second stator 252 is so rotated in the rotational direction of the rotor 260 as to adjust the air gap lengths, whereby the quantity of magnetic flux can be easily changed by rendering the magnitude of the air gap length ($2 \times L1 + 2 \times L2$) of the magnetic paths formed in the initial state not rotating the second stator 254 and the magnitude of the air gap length ($2 \times L1 + L3$) of the magnetic paths formed in the state after rotating the second stator 252 different from each other. Further, no space for at least one of the stator 250 and the rotor 250 moving in the extensional direction of the rotating shaft 240 may be provided as compared with a case of adjusting the air gap length by moving at least one of the stator 250 and the rotor 260 in the extensional direction of the rotating shaft 240, for example, whereby the rotating electric machine 230 may not be increased in size. As a result of these, the rotating electric machine 230 capable of adjusting power generation characteristics and torque output characteristics varying with the quantity of magnetic flux while attaining downsizing can be obtained.

According to the eighth embodiment, the air gap length is so adjusted that substantially no magnetic flux flows to the portions of the first teeth 254 mounted with the coils 255 in the case of rotating the rotating electric machine 230 with a low torque at a high speed, whereby the quantity of magnetic flux generated in the first teeth 254 can be inhibited from increase caused by a current flowing to the coils 255 due to the magnetic flux traversing the coils 255 in rotation of the rotor 260. Thus, a load with respect to the rotation of the rotor 260 can be inhibited from increase. Further, inflow of the magnetic flux into the first teeth 254 and the second teeth 257 is suppressed in rotation of the rotor 260, whereby the load with respect to rotation of the rotor 260 can be inhibited from increase also by this.

According to the eighth embodiment, the rotation driving portion 270 for driving the second stator 252 constituting the stator 250 is so provided that the second stator 252 can be easily rotated in the rotational direction of the rotor 260. Thus, the air gap length can be easily adjusted by rotating the second stator 252 in the rotational direction of the rotor 260.

(Ninth Embodiment)

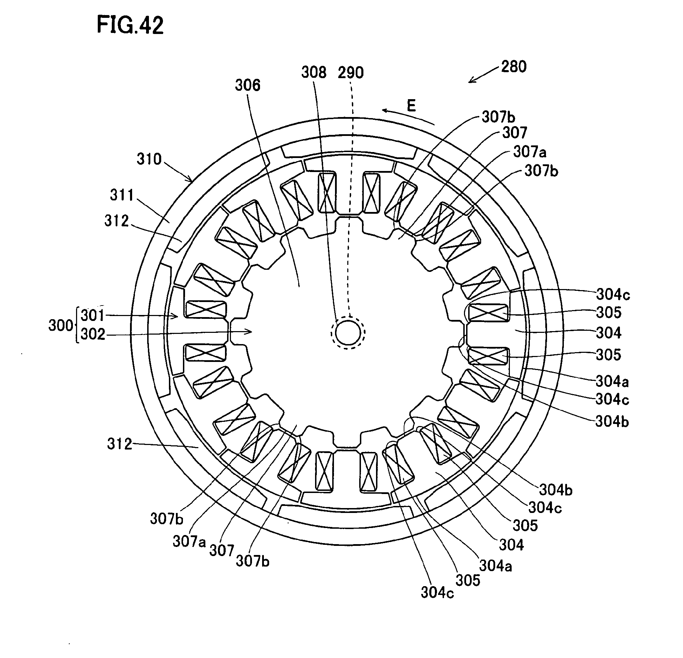

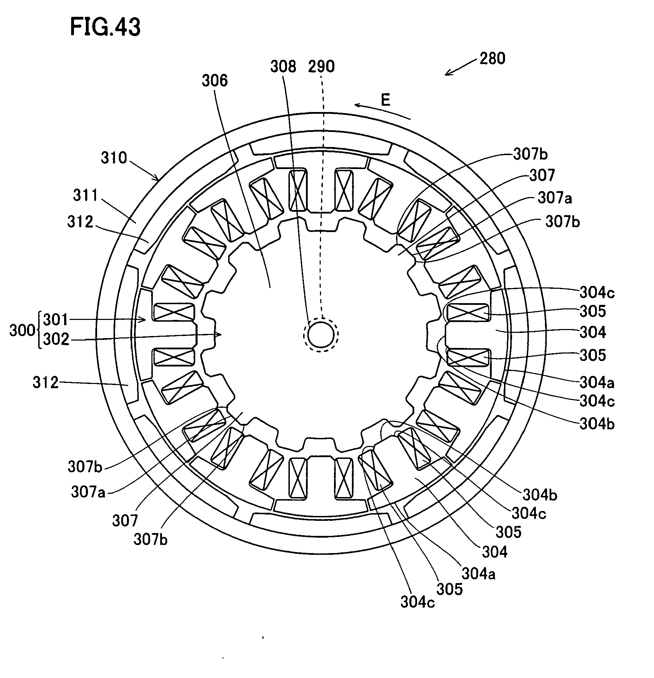

Referring to Figs. 42 and 43, an example of applying the present invention to a rotating electric machine having a radial gap type structure dissimilarly to the aforementioned eighth embodiment is described in this ninth embodiment.

A rotating electric machine 280 according to this ninth embodiment comprises a rotating shaft 290, a stator 300 and a rotor 310, as shown in Fig. 42. According to the ninth embodiment, the rotating electric machine 280 has such a radial gap type structure that the rotor 310 is cylindrically formed and the stator 300 is arranged inside the rotor 310 at a prescribed interval with respect to the rotor 310. When mounting the rotating electric machine 280 according to the ninth embodiment on the automatic two-wheeler 100 according to the first embodiment shown in Fig. 1, the rotating shaft 290 functions as a crankshaft.

According to the ninth embodiment, the stator 300 is divided into two, i.e., a first stator 301 and a second stator 302. The first stator 301 is annularly formed, while the second stator 302 is arranged inside the first stator 301 at a prescribed interval. The second stator 302 is enabled to rotate about the axial core of the rotating shaft 290 serving as the rotation center in the rotational direction (direction of arrow E) of the rotor 310.

As the specific structure of the stator 300, the first stator 301 includes a plurality of first teeth 304 and a plurality of coils 305. The first teeth 304 are examples of the "first core members" in the present invention. The plurality of first teeth 304 are annularly arranged at a prescribed interval from each other. First end surfaces 304a of the first teeth 304 have a larger area than second end surfaces 304b opposite to the first end surfaces 304a. Therefore, the interval between the first end surfaces 304a of adjacent first teeth 304 is smaller than the interval between the second end surfaces 304b. Further, the first end surfaces 304a of the first teeth 304 are opposed to the rotor 310. In addition, ends 304c of the first teeth 304 closer to the second end surfaces 304b are chamfered. The plurality of coils 305 are mounted on the respective ones of the plurality of first teeth 304 respectively. The coils 305 are not mounted on portions of the first end surfaces 304a of the first teeth 304.

The second stator 302 includes a stator yoke 306 having a plurality of second teeth 307 and a rotating shaft 308. The second teeth 307 are examples of the "second core members" in the present invention. The stator yoke 306 is formed in the shape of a disc, and the plurality of second teeth 307 are provided on the circumferential surface of the discoid stator yoke 306, to protrude from the circumferential surface of the stator yoke 306. Further, the plurality of second teeth 307 are arranged at a prescribed interval from each other along the circumferential direction of the discoid stator yoke 306. In addition, ends 307b of the second teeth 307 closer to protruding end surfaces 307a are chamfered. The rotating shaft 308 is enabled to rotate in the rotational direction (direction of arrow E) of the rotor 310. Further, the rotating shaft 308 is so mounted on the central portion of the stator yoke 306 that the stator 306 can corotate with the rotating shaft 308.

The cylindrical rotor 310 includes a rotor yoke 311 and a plurality of magnets 312. The rotor yoke 311 is cylindrically formed, and enabled to corotate with the rotating shaft 290. The plurality of magnets 312 include a plurality of magnets 312 of north poles and a plurality of magnets 312 of south poles, and are mounted on the inner peripheral surface of the rotor yoke 311. In the plurality of magnets 312, the north poles and the south poles are alternately arranged at a prescribed interval along the circumferential direction of the discoid rotor yoke 311.

In the rotating electric machine 280 according to the ninth embodiment, magnetic paths are formed by the rotor 310, the first stator 301 and the second stator 302 when the first teeth 304 and the second teeth 307 are opposite to each other as shown in Fig. 42, similarly to the case of the aforementioned eighth embodiment. When the first teeth 304 and the second teeth 307 are opposite to each other, the distance between the first teeth 304 and the magnets 312 and the distance between the first teeth 304 and the second teeth 307 are air gap lengths functioning as magnetic resistance with respect to the magnetic paths.

When the second teeth 307 move to positions not opposite to the first teeth 304 as shown in Fig. 43, magnetic paths are formed by the rotor 310 and the first stator 301, similarly to the case of the aforementioned eighth embodiment. When the second teeth 307 move to the positions not opposite to the first teeth 304, the distance between the first teeth 304 and the magnets 312 and the distance between adjacent first teeth 304 on the sides of the end surfaces 304a are the air gap lengths functioning as the magnetic resistance with respect to the magnetic paths.

In the rotating electric machine 280 according to the ninth embodiment, the air gap lengths with respect to the magnetic paths in the case where the first teeth 304 and the second teeth 307 are not opposite to each other exceed the air gap lengths with respect to the magnetic paths in the case where the first teeth 304 and the second teeth 307 are opposite to each other, similarly to the aforementioned eighth embodiment. In other words, the quantity of magnetic flux in the case where the first teeth 304 and the second teeth 307 are not opposite to each other decreases below the quantity of magnetic flux in the case where the first teeth 304 and the second teeth 307 are opposite to each other.

A method of adjusting the air gap lengths in the rotating electric machine 280 according to the ninth embodiment is now described with reference to Figs. 42 and 43.

In a case of rotating the rotating electric machine 280 with a low torque at a low speed, the second stator 302 is not rotated but held on a position of an initial state, as shown in Fig. 42. In other words, the second stator 302 is so held that the second teeth 307 are opposite to the first teeth 304. In a case of rotating the rotating electric machine 280 with a low torque at a high speed from the state of Fig. 42, the second stator 302 is rotated in the rotational direction (direction of arrow E) of the rotor 310 so that the second teeth 307 and the first teeth 304 are not opposite to each other, as shown in Fig. 43. In this case, the quantity of magnetic flux in the state (see Fig. 43) after rotating the second stator 302 decreases below the quantity of magnetic flux in the initial state (see Fig. 42) before rotating the second stator 302, whereby a load with respect to rotation of the rotor 310 is reduced. Thus, low-torque high-speed rotation is made possible.

According to the ninth embodiment, the air gap lengths (quantity of magnetic flux) with respect to the magnetic paths can be adjusted by rotating the second stator 302 similarly to the aforementioned eighth embodiment in the rotating electric machine 280 having the radial gap type structure, due to the aforementioned structure. Thus, the rotating electric machine 280 capable of adjusting power generation characteristics and torque output characteristics varying with the quantity of magnetic flux while attaining downsizing can be obtained similarly to the aforementioned eighth embodiment.

The embodiments disclosed this time must be considered as illustrative and not restrictive in all points. The scope of the present invention is shown not by the above description of the embodiments but by the scope of claim for patent, and all modifications within the meaning and range equivalent to the scope of claim for patent are included.

For example, while the examples of applying the present invention to automatic two-wheelers have been shown in the aforementioned first to seventh embodiments, the present invention is not restricted to this but is also applicable to a vehicle other than the automatic two-wheeler.

**Claims**

1. A vehicle comprising:

a rotating electric machine (20, 60, 120, 170, 220, 230, 280) including a rotating shaft (11, 51, 111, 161, 211, 240, 290), a rotor (22, 62, 122, 172, 222, 260, 310) mounted on said rotating shaft for corotating with said rotating shaft and a stator (21, 61, 121, 171, 221, 250, 300) opposed to said rotor at a prescribed interval, with said rotor and said stator so formed that an air gap length functioning as magnetic resistance is adjustable; and an engine (10, 50, 110, 160, 210) connected to said rotor of said rotating electric machine.

2. The vehicle according to claim 1, wherein
said engine (50, 110) is started with said rotating electric machine (60, 120).

3. The vehicle according to claim 2, wherein
said rotating electric machine further includes an adjusting mechanism portion (130) for adjusting said air gap length and a speed detecting portion (156) for detecting the speed of said engine or said rotor,
said air gap length is adjusted to reach a first value by said adjusting mechanism portion on the basis of said speed detected by said speed detecting portion in starting of said engine, and
said air gap length is adjusted to reach a second value by said adjusting mechanism portion on the basis of said speed detected by said speed detecting portion after starting of said engine.

4. The vehicle according to claim 1, wherein
power is applied to said engine (160) by said rotating electric machine (170).

5. The vehicle according to claim 1, further comprising a power source (230) charged by power generation of said rotating electric machine (220), wherein
said engine (210) is driven by said rotating electric machine serving as a power generator.

6. The vehicle according to any of claims 1 to 5, wherein
said rotor and said stator are opposed to each other at the prescribed interval in the extensional direction of said rotating shaft, and
said air gap length between said rotor and said stator is adjusted by adjusting the distance between said rotor and said stator in the extensional direction of said rotating shaft.

7. The vehicle according to claim 6, wherein
said air gap length between said rotor and said stator is adjusted by adjusting the distance between said rotor and said stator in the extensional direction of said rotating shaft on the basis of a signal indicating a vehicle state.

8. The vehicle according to any of claims 1 to 5, wherein
said stator (250) includes a first stator (251, 301) and a second stator (252, 302) opposed to each other at a prescribed interval, and
said air gap length is adjusted by moving at least one of said first stator and said second stator.

9. The vehicle according to claim 8, wherein
said first stator includes a plurality of first core members (254, 304) annularly arranged at a prescribed interval from each other,
said second stator includes a plurality of second core members (257, 307) annularly arranged at a prescribed interval from each other, and
said air gap length is adjusted by moving at least one of said first stator and said second stator thereby changing to a state where said first core members and said second core members are opposite to each other and a state where said first core members and said second core members are not opposite to each other.

10. The vehicle according to claim 9, wherein
either said first core members or said second core members are opposed to said rotor,
a coil (250) is mounted on either said first core members or said second core members opposed to said rotor, and
said air gap length is so adjusted that substantially no magnetic path is formed on a portion of either said first core members or said second core members mounted with said coil.

**11.** The vehicle according to claim 10, wherein
said air gap length is adjusted by rotating said second stator in the rotational direction of said rotor.

**12.** The vehicle according to claim 11, further comprising a rotation driving portion (270) for rotating said second stator in the rotational direction of said rotor.

**13.** The vehicle according to claim 11, wherein
said air gap length between said first core members and said second core members decreases below the distance between adjacent said first core members when said first core members and said second core members are opposite to each other,
said air gap length between adjacent said first core members decreases below the distance between said first core members and said second core members when said second stator rotates in the rotational direction of said rotor so that said second core members move to a position not opposite to said first core members, and
said air gap length between said first core members and said second core members in the case where said first core members and said second core members are opposite to each other is smaller than said air gap length between adjacent said first core members in the case where said second core members move to the position not opposite to said first core members.

**14.** The vehicle according to claim 9, wherein
said plurality of first core members constituting said first stator are opposed to said rotor at a prescribed interval in the extensional direction of said rotating shaft while said plurality of second core members constituting said second stator are opposed to said first stator at a prescribed interval in the extensional direction of said rotating shaft,
a magnetic path is formed by said rotor, said first core members and said second core members in the state where said first core members and said second core members are opposite to each other, and
a magnetic path is formed by said rotor and said first core members in the state where said first core members and said second core members are not opposite to each other.

**15.** The vehicle according to claim 9, wherein
said rotor includes a cylindrically formed rotor,
said plurality of first core members constituting said first stator are opposed to said rotor at a prescribed interval in the radial direction while said plurality of second core members constituting said second stator are arranged inside or outside said first stator at a prescribed interval with respect to said first stator,
a magnetic path is formed by said rotor, said first core members and said second core members in the state where said first core members and said second core members are opposite to each other, and
a magnetic path is formed by said rotor and said first core members in the state where said first core members and said second core members are not opposite to each other.

**16.** The vehicle according to claim 8, wherein
the position of said first stator is fixed, and
said air gap length is adjusted by moving said second stator.

FIG.1

100

10  20

## FIG.2

## FIG.3

# FIG.4

(AIR GAP LENGTH: G1)

QUANTITY OF GENERATION
OF ELECTROMOTIVE FORCE

ENGINE SPEED

# FIG.5

(AIR GAP LENGTH: G2)

QUANTITY OF GENERATION
OF ELECTROMOTIVE FORCE

ENGINE SPEED

FIG.6

300b

300a

Bmax

MAGNETIC FLUX
DENSITY

P

Bm

x ←

Hm

MAGNETIZING FORCE

FIG.7

302a

301a

Ig

Im

## FIG.8

302b

301b

lg    lm

# FIG.9

FIG.10

FIG.11

FIG.12

FIG.13

# FIG.14

EP 1 713 172 A1

## FIG.15

AIR GAP LENGTH

G11

N1

ENGINE SPEED

## FIG.16

G13

G12

AIR GAP LENGTH

G11

N1        N2

ENGINE SPEED

## FIG.17

IN ENGINE STARTING

AIR GAP LENGTH

G12

G11

T1

LOW-SPEED
REVOLUTION

N1

ENGINE SPEED

## FIG.18

IN ENGINE STARTING

AIR GAP LENGTH

G12

G11

T2

LOW-SPEED
REVOLUTION

N1

ENGINE SPEED

FIG.19

AIR GAP LENGTH

G12

T3

G11

ACCELERATION

N1

ENGINE SPEED

EP 1 713 172 A1

FIG.20

# FIG.21

# FIG.22

## FIG.23

## FIG.24

## FIG.25

(AIR GAP LENGTH:G31)

TORQUE OUTPUT

ENGINE SPEED

FIG.26

ENGINE

G32

FIG.27

(AIR GAP LENGTH:G32)

TORQUE OUTPUT

ENGINE SPEED

## FIG.28

```
          183                184
    ┌──────────────┐    ┌──────────┐
    │ MOTOR DRIVING│◄──►│ BATTERY  │
    │   CIRCUIT    │    └──────────┘
    └──────────────┘
            ▲
            │
            ▼
┌────────┐  ┌──────────┐  ┌────────┐  ┌────────┐
│ ENGINE │◄►│ ELECTRIC │◄►│ CLUTCH │◄►│  TIRE  │
│        │  │  MOTOR   │  │        │  │        │
└────────┘  └──────────┘  └────────┘  └────────┘
    160         170          181         180
```

## FIG.29

```
             183                184
      ┌──────────────┐    ┌──────────┐
      │ MOTOR DRIVING│◄──►│ BATTERY  │
      │   CIRCUIT    │    └──────────┘
      └──────────────┘
              ▲
              │
              ▼
┌────────┐ ┌────────┐ ┌──────────┐ ┌────────┐ ┌────────┐
│ ENGINE │◄►│ CLUTCH │◄►│ ELECTRIC │◄►│ CLUTCH │◄►│  TIRE  │
│        │ │        │ │  MOTOR   │ │        │ │        │
└────────┘ └────────┘ └──────────┘ └────────┘ └────────┘
   160        182         170         181        180
```

## FIG.30

```
          181          170          184
    ┌────────┐  ┌──────────┐  ┌──────────┐
    │ CLUTCH │◄►│ ELECTRIC │◄►│ BATTERY  │
    │        │  │  MOTOR   │  │          │
    └────────┘  └──────────┘  └──────────┘
         ▲
         │
         ▼
┌────────┐ ┌────────┐ ┌──────────────────┐ ┌────────┐
│ ENGINE │◄►│ CLUTCH │◄►│ POWER DISTRIBUTION│◄►│  TIRE  │
│        │ │        │ │   MECHANISM      │ │        │
└────────┘ └────────┘ └──────────────────┘ └────────┘
   160        182            185             180
```

# FIG.31

# FIG.32

(AIR GAP LENGTH:G33)

QUANTITY OF GENERATION OF ELECTROMOTIVE FORCE

ENGINE SPEED

## FIG.33

210     211     222     220     221

ENGINE

G34

230 — POWER SOURCE

## FIG.34

(AIR GAP LENGTH:G34)

QUANTITY OF GENERATION
OF ELECTROMOTIVE FORCE

ENGINE SPEED

FIG.35

FIG.36

240

260 261 261b

262 262

262 261a

254c 254a
254b 254 254c

251 →

254c 254 254a
254b 254c

254c 254 254a
254b 254c

255

251 →

255

250

257b 257a
257 257b

252 →

255

257 257b
257b 257a

257b 257
257a 257b

252 →

256

256a 256b

256a 256a 256a 256b

# FIG.37

# FIG.38

**FIG.39**

**FIG.40**

## FIG.41

FIG.42

## FIG.43

## INTERNATIONAL SEARCH REPORT

| | International application No. |
|---|---|
| | PCT/JP2005/001477 |

**A. CLASSIFICATION OF SUBJECT MATTER**
Int.Cl$^7$ H02P9/04, B60K6/04, H02K7/12, 21/24, H02P9/06

According to International Patent Classification (IPC) or to both national classification and IPC

**B. FIELDS SEARCHED**

Minimum documentation searched (classification system followed by classification symbols)
Int.Cl$^7$ H02P9/00-9/48, H02K21/00-21/48

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2002-345299 A (Hideo KAWAMURA),<br>29 November, 2002 (29.11.02),<br>Par. Nos. [0020] to [0026]<br>& US 2002-84705 A1      & EP 1220427 A2 | 1-5,8-16<br>6,7 |
| Y | Japanese Utility Model Publication No.<br>60-174474<br>(Nissan Motor Co., Ltd.),<br>19 November, 1985 (19.11.85),<br>Full text<br>(Family: none) | 6,7 |

[X] Further documents are listed in the continuation of Box C.　　[ ] See patent family annex.

| | |
|---|---|
| *　　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>21 April, 2005 (21.04.05) | Date of mailing of the international search report<br>17 May, 2005 (17.05.05) |
|---|---|
| Name and mailing address of the ISA/<br>　　Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2005/001477

C (Continuation). DOCUMENTS CONSIDERED TO BE RELEVANT

| Category* | Citation of document, with indication, where appropriate, of the relevant passages | Relevant to claim No. |
|---|---|---|
| A | JP 52-80410 A (Simmonds Precision Engine Systems, Inc.), 06 July, 1977 (06.07.77), Full text & US 4027229 A & GB 1545227 A & DE 2654812 A & FR 2335986 A & CA 1060523 A | 1-16 |
| A | JP 2002-325412 A (Mitsubishi Heavy Industries, Ltd.), 08 November, 2002 (08.11.02), Full text (Family: none) | 1-16 |

Form PCT/ISA/210 (continuation of second sheet) (January 2004)

**REFERENCES CITED IN THE DESCRIPTION**

**Patent documents cited in the description**

- JP 9037598 A